# EUROPEAN PATENT SPECIFICATION

(11) **EP 2 240 725 B1**
(45) Date of publication and mention of the grant of the patent: **19.10.2016**
(21) Application number: 09705946.3
(22) Date of filing: 29.01.2009
(51) Int. Cl.: F24C 15/10

(54) **HYDROPHOBICALLY ASSOCIATED POLYMERS IN WATER-IN-WATER POLYMER DISPERSIONS**
HYDROPHOB ASSOZIIERTE POLYMERE IN WASSER-IN-WASSER-POLYMERDISPERSIONEN
POLYMÈRES ASSOCIÉS DE MANIÈRE HYDROHOBIQUE DANS DES DISPERSIONS DE POLYMÈRE D'EAU DANS L'EAU

(30) Priority: 01.02.2008 EP 08001901
(43) Date of publication of application: 20.10.2010
(73) Proprietor: Solenis Technologies Cayman, L.P., 8200 Schaffhausen (CH)
(72) Inventor: POLVERARI, Marco, Savia, Montreal QC H1L1Y9 (CA); BOEKELO, Christian, 47807 Krefeld (DE)
(74) Representative: Kutzenberger, Helga
(86) International application number: PCT/EP2009/000585
(87) International publication number: WO 2009/095245

(56) References cited:
- WO-A-02/46275
- US-A- 5 840 804

## Description

### FIELD OF THE INVENTION

The present invention relates to water-in-water polymer dispersions containing hydrophobically associative polymers, methods for their preparation and their use.

The water-in-water polymer dispersions are useful *inter alia* as flocculants, dewatering (drainage) aids and retention aids in papermaking.

### BACKGROUND ART

In the manufacture of paper, a papermaking furnish, i.e. an aqueous slurry of cellulosic fiber having a water content of usually more than 95 wt.-% is formed into a paper sheet typically having a water content of less than 5 wt.-%. Hence, the dewatering (drainage) and retention aspects of papermaking are important to the efficiency and cost of the manufacture.

Typically, a cellulosic thin stock is drained on a moving screen to form a sheet which is then dried. It is well known to apply water soluble polymers to the cellulosic suspension in order to effect flocculation of the cellulosic solids and enhance drainage on the moving screen. As it is difficult to obtain the optimum balance of retention, drainage, drying and formation by adding a single polymeric retention aid, it is common practice to add two separate materials in sequence.

According to a well known method for papermaking, a cellulosic suspension is formed, flocculated by means of a flocculant, mechanically sheared, optionally reflocculated by means of a re-flocculant, drained on a screen to form a sheet and then dried.

It is known from the prior art to employ hydrophobically associative polymers (HAPs) as flocculants. The highly associative structure of HAP in aqueous media results in its unique rheological properties and salt resistance, which are desirable in many applications, such as oil recovery, thickening and drug release applications.

DE-A 44 06 624 discloses low viscous, cross-linkable and cross-linked aqueous polymer dispersions that are prepared by polymerizing a water-soluble monomer, optionally a hydrophobic monomer and a cross-linker in the presence of a cationic polymeric dispersant. Similarly, DE-A 42 16 167, DE-A 43 16 200 and DE-A 43 35 567 disclose aqueous dispersions of water-soluble polymers that are prepared by polymerizing a water-soluble monomer and at least one hydrophobic monomer in the presence of a cationic polymeric dispersant. The polymer dispersions are useful as thickeners, flocculation aids and retention aids in papermaking.

DE-A 195 32 229 discloses cross-linked aqueous polymer dispersions that are prepared by polymerizing a water-soluble monomer, a cross-linkable N-methylol-compound, optionally a cross-linker and optionally a hydrophobic monomer in the presence of a cationic polymeric dispersant. The polymer dispersions are useful as thickeners, flocculation aids, retention aids in papermaking, and adhesives, particularly as wallpaper coatings.

WO 2004/094781 discloses hydrophobically modified polymer compositions for treating subterranean formations. The hydrophobically modified polymers are prepared by adding a cationic surfactant to an anionic polymer or by adding an anionic surfactant to a cationic polymer.

EP-A 1 250 360 discloses a method for producing hydrophobically associative polymers by a brine dispersion polymerization method. Highly associative anionic hydrophobically associative polymer is synthesized in an aqueous salt solution containing acrylic acid, acrylamide and lauryl acrylate. The aqueous dispersion containing the hydrophobically associative polymer may be used as one or more retention and drainage aids in a papermaking process from pulp furnish, as the one or more thickeners in a paint formulation containing pigment, polymer and a thickener, or as the one or more flocculation aids in a waste water treatment system or in a dewatering sludge system.

The properties of the retention and drainage aids of the prior art are, however, not satisfactory in every respect.

In order to increase the output of paper, many modern paper making machines operate at higher speeds thereby increasing the shearing forces. Furthermore, for economical and/or ecological reasons, many modern paper making machines operate with closed water circuits. As a consequence of enhanced shearing and water recycling, there is a need for sophisticated drainage and retention systems having improved characteristics, such as rheological properties, viscoelasticity and retention efficiency, particularly under shear conditions and/or at high salt concentrations.

### SUMMARY OF THE INVENTION

A first aspect of the invention relates to a method for manufacturing a water-in-water polymer dispersion which comprises subjecting an aqueous reaction mixture comprising
(i) a cationic polymeric dispersant and
(ii) a monomer composition containing
   a) 45 to 99 mole.-% of one or more non-ionic ethylenically unsaturated monomers, based on the total molar amount of monomers; and
   b) 0.001 to 50 mole.-%, preferably 0.001 to 27.5 mole.-%, of one or more cationic ethylenically unsaturated monomers, based on the total molar amount of monomers; and
   c) 0.001 to 27.5 mole.-% of one or more hydrophobic monomers according to general formula (I) 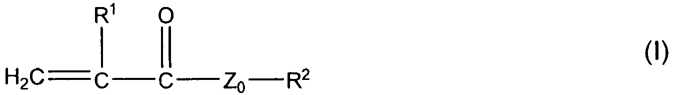
wherein
R¹ means hydrogen or C₁-C₃-alkyl;
R² means C₅-C₂₄-alkyl, preferably C₉-C₂₀-alkyl; and
Z₀ means O, NH or NR³ with R³ being C₁-C₃-alkyl, based on the total molar amount of monomers; to a free radical polymerization reaction such that the resulting water-in-water polymer dispersion contains a cationic copolymer; wherein the aqueous reaction mixture does not contain branching agents and cross-linkers such that the cationic copolymer is substantially free of branching.

It has been surprisingly found that the water-in-water polymer dispersions thus obtained have improved properties, even under shear conditions and at high salt concentrations. It has been surprisingly found that essential properties of the water-in-water polymer dispersions, such as ash retention, product viscosity and viscoelasticity, can be triggered by the chemical nature of the hydrophobic alkyl chain of the hydrophobic monomer according to general formula (I) (= R²) and by the relative content of the hydrophobic monomer with respect to the further monomers forming the cationic copolymer. The resulting HAP is highly associative in aqueous solution as indicated by its viscosity and viscoelasticity, which sets it apart from conventional aqueous high molecular weight polymer dispersions.

The *in situ* copolymerization of the one or more non-ionic ethylenically unsaturated monomers, the one or more cationic ethylenically unsaturated monomers, and the one or more hydrophobic monomers according to general formula (I) in the aqueous reaction mixture in the presence of the cationic polymeric dispersant yields a water-in-water polymer dispersion wherein the cationic hydrophobically modified polymer product (cationic copolymer) is intercalated in the cationic polymeric dispersant thereby forming an interpenetrating complex.

Water-in-water polymer dispersions of this type are not obtainable by polymerizing the monomers in absence of the cationic polymeric dispersant and adding the cationic polymeric dispersant thereafter, but require the presence of the cationic polymeric dispersant during the polymerization reaction *in situ.* Otherwise, different products exhibiting different properties are obtained. In particular, when adding an aqueous dispersion of a cationic polymeric dispersant to a water-in-water polymer dispersion that has been obtained separately by polymerizing one or more non-ionic ethylenically unsaturated monomers, one or more cationic ethylenically unsaturated monomers, and one or more hydrophobic monomers according to general formula (I), a gel block would be obtained that could not be properly handled any further.

Depending on the total concentration of the monomers, it would practically be impossible to homogeneously distribute the cationic polymeric dispersant in the water phase of the water-in-water polymer dispersion in order to form an interpenetrating complex. Further, when trying to subsequently introduce the cationic polymeric dispersant in form of an aqueous solution, the water content thereof would dilute the overall composition.

### BRIEF DESCRIPTION OF THE DRAWINGS

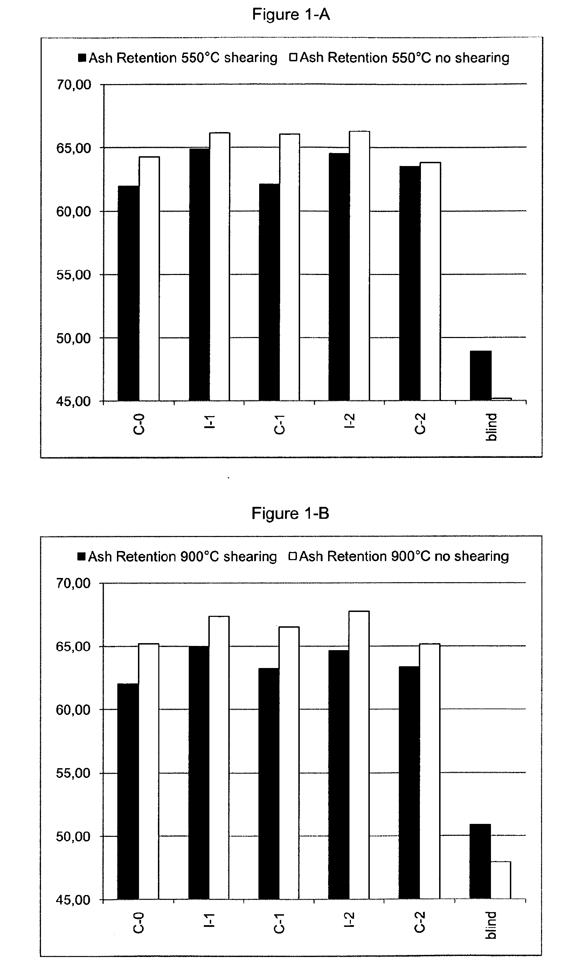

Figure 1 shows the ash retention of the water-in-water polymer dispersions according to the invention (I-1 and I-2) in comparison to conventional water-in-water polymer dispersions (C-0, C-1 and C-2) at 1200 ppm with shearing and without shearing at 550°C (Figure 1-A) and at 900°C (Figure 1-B).

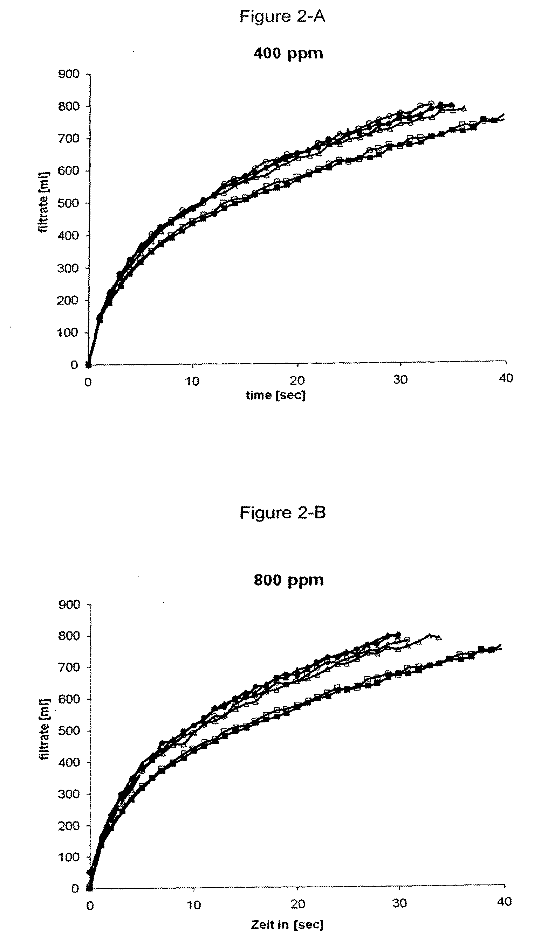

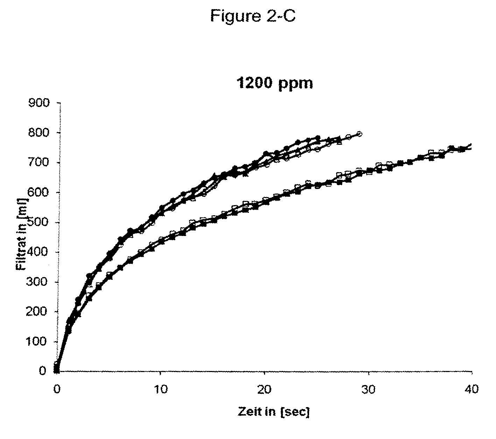

Figure 2 shows the drainage (dewatering) efficiency of the water-in-water polymer dispersions according to the invention (I-1 and I-2) at 400 ppm (Figure 2-A), 800 ppm (Figure 2-B) and 1200 ppm (Figure 2-C) (■ blind without shearing, □ blind with shearing, ● I-1 without shearing, ∘ I-1 with shearing, ▲ I-2 without shearing, △ I-2 with shearing).

### DETAILED DESCRIPTION OF THE INVENTION

A first aspect of the invention relates to a method for manufacturing a water-in-water polymer dispersion which comprises subjecting an aqueous reaction mixture comprising (i) a cationic polymeric dispersant and (ii) a monomer composition containing a) 45 to 99 mole.-% of one or more non-ionic ethylenically unsaturated monomers, b) 0.001 to 50 mole.-%, preferably 0.001 to 27.5 mole.-%, of one or more cationic ethylenically unsaturated monomers, and c) 0.001 to 27.5 mole.-% of one or more hydrophobic monomers according to general formula (I), all mole percentages being based on the total molar amount of the radically polymerizable monomers, to a free radical polymerization reaction such that the resulting water-in-water polymer dispersion contains a cationic copolymer as well as the cationic polymeric dispersant that is present initially.

Water-in-water polymer dispersions are well known in the art. In this regard it can be referred to, e.g., H. Xu et al., Drug Dev Ind Pharm., 2001, 27(2), pp 171-4; K.A. Simon et al., Langmuir., 2007, 30;23(3), 1453-8; P. Hongsprabhas, International Journal of Food Science & Technology, 2007, 42(6), 658-668; D. Gudlauski, PaperAge, May/June 2005, pp 36 f, US-A 2004 0034145, US-A 2004 0046158, US-A 2004 0211932, US-A 2005 0242045, US-A 2006 0112824 and US-A 2007 0203290.

The standard emulsion found in the water treatment industry, however, is a water-in-oil inverse emulsion, i.e. the polymer is located in microscopic water droplets emulsified in an oil medium. In fact, the water in the droplets is not considered free since the polymer restrains it and the product is more like a dispersion of a gel in oil. A water-in-water dispersion is based on a different principle involving a polymer precipitation in water, preferably in an aqueous salt solution, e.g. brine. The final product obtained is a stable dispersion of microscopic polymer particles in water. These dispersions are solvent free, making this range of products environmentally friendly.

For the purpose of the specification the term "water-in-water polymer dispersion" refers to an aqueous system containing a water-soluble or water-swellable cationic copolymer and a cationic polymeric dispersant, where the water-soluble or water swellable cationic copolymer has been obtained by *in situ* polymerization of suitable monomers in the presence of said cationic polymeric dispersant.

The cationic polymeric dispersant as well as the water-soluble or water swellable cationic copolymer can serve as coagulant and/or flocculant. Chemical coagulation, the alteration of suspended and colloidal particles so they adhere to each other, is one type of chemical treatment process. Coagulation is a process that causes the neutralization of charges or a reduction of the repulsion forces between particles. Flocculation is the aggregation of particles into larger agglomerations ("flocs"). Coagulation is virtually instantaneous, while flocculation requires some time for the flocs to develop. For the purpose of the specification, the term "cationic polymeric dispersant" preferably refers to a water-soluble or water-dispersible, preferably highly ionic, polymer of comparatively low molecular weight. When the overall electrical charge associated with particles and organic matter in water is negative, e.g. the cellulosic fiber suspension processed in papermaking, positively charged dispersants are preferably added to neutralize the electrical charge.

For the purpose of the specification, the term "water-soluble", particularly when it relates to the water-solubility of monomers, preferably refers to a solubility in pure water at ambient temperature of at least 10 g I⁻¹, more preferably at least 25 g I⁻¹, still more preferably at least 50 g I⁻¹, yet more preferably at least 100 g I⁻¹, most preferably at least 250 g I⁻¹ and in particular at least 500 g I⁻¹. For the purpose of the specification, the term "water-soluble", particularly when it relates to the water-solubility of polymers, preferably refers to a solubility in pure water at ambient temperature of at least 1.0 g I⁻¹, more preferably at least 2.5 g I⁻¹, still more preferably at least 5.0 g I⁻¹, yet more preferably at least 10.0 g I⁻¹, most preferably at least 25.0 g I⁻¹ and in particular at least 50.0 g I⁻¹.

For the purpose of the specification, the term "water-swellable" preferably means that the polymer, while not water-soluble, absorbs an appreciable amount of water. Typically, the weight of the polymer increases by at least 2 wt.-%, preferably at least 5 wt.-%, after being immersed in water at room temperature, e.g., 25°C, for 1 hour, more preferably by 60 to 100 times its dry weight.

For the purpose of the specification, the term "cationic copolymer" refers to the copolymer that is obtainable by an *in situ* polymerization reaction wherein a monomer composition comprising a) 45 to 99 mole.-% of one or more non-ionic ethylenically unsaturated monomers, b) 0.001 to 50 mole.-%, preferably 0.001 to 27.5 mole.-%, of one or more cationic ethylenically unsaturated monomers, and c) 0.001 to 27.5 mole.-% of one or more hydrophobic monomers according to general formula (I) is radically polymerized in the presence of a cationic polymeric dispersant.

It should be emphasized that the presence of the cationic polymeric dispersant during the radical polymerization of the one or more non-ionic ethylenically unsaturated monomers, the one or more cationic ethylenically unsaturated monomers, and the one or more hydrophobic monomers according to general formula (I) is essential for the properties of the resultant water-in-water polymer dispersion. Identical water-in-water polymer dispersions are not obtainable by polymerizing the monomers in absence of the cationic polymeric dispersant and adding the cationic polymeric dispersant thereafter. The cationic polymeric dispersant is part of a water-in-water dispersion into which the cationic copolymer is polymerized from the monomers. In other words, the cationic copolymer obtained by the polymerization reaction is somehow embedded in the cationic polymeric dispersant which is initially present.

The internal structure of the resulting interpenetrating polymer system of the cationic polymeric dispersant and the cationic copolymer, however, may not be reproduced by simply mixing a cationic polymeric dispersant and a polymer separately obtained from the same monomers as the cationic copolymer.

For the purpose of the specification, the term "(alk)acrylate" shall refer to alkacrylate as well as acrylate. In analogy, the term "(meth)acrylate" shall refer to methacrylate as well as acrylate.

For the purpose of the specification, the term "homopolymer" shall refer to a polymer obtained by polymerization of substantially a single type of monomer, whereas the term "copolymer" shall refer to a polymer obtained by polymerization of two, three, four or more different types of monomers (co-monomers).

For the purpose of the specification, "alkyl" shall mean any saturated linear, branched and/or cyclic hydrocarbon having a single binding partner, such as methyl, ethyl, n-propyl, iso-propyl, n-butyl, iso-butyl, sec-butyl, tert-butyl, pentyl, hexyl, heptyl, octyl, nonyl, decyl, isodecyl, undecyl, dodecyl, tridecyl, tetradecyl, pentadecyl, hexadecyl, heptadecyl, octadecyl, nonadecyl, eicosyl, 2-ethyl-hexyl, cyclopropyl, cyclobutyl, cyclopentyl, cyclohexyl, cycloheptyl, cyclooctyl, methylcyclohexyl, methylcyclopentyl-ethenyl, adamantyl.

For the purpose of the specification, the term "alkylene" shall mean any saturated linear, branched and/or cyclic hydrocarbon having two binding partners, such as

-CH₂CH₂-, -CH₂CH₂CH₂- and -CH₂CH(CH₃)CH₂-.

According to the method of the invention an aqueous reaction mixture comprising (i) a cationic polymeric dispersant and (ii) a monomer composition is subjected to a free radical polymerization reaction.

The aqueous reaction mixture according to the invention comprises water, preferably deionized water. The water content may vary from 0.01 to 99.99 wt.-%. In a preferred embodiment, the water content is within the range of from 10 to 90 wt.-%, more preferably 15 to 85 wt.-%, still more preferably 20 to 80 wt.-%, yet more preferably 25 to 75 wt.-%, most preferably 30 to 70 wt.-% and in particular 35 to 65 wt.-%, based on the total weight of the aqueous reaction mixture. In another preferred embodiment, the water content is within the range of from 35 to 90 wt.-%, more preferably 40 to 85 wt.-%, still more preferably 45 to 80 wt.-%, yet more preferably 50 to 75 wt.-%, most preferably 55 to 70 wt.% and in particular 60 to 66 wt.-%, based on the total weight of the aqueous reaction mixture.

The aqueous reaction mixture according to the invention further comprises a cationic polymeric dispersant. Preferably, the cationic polymeric dispersant is water-soluble or water-swellable. Preferably, the content of the cationic polymeric dispersant is within the range of from 0.1 to 40 wt.-%, more preferably 0.5 to 35 wt.-%, still more preferably 1.0 to 30 wt.-%, yet more preferably 5.0 to 25 wt.-%, most preferably 10 to 20 wt.-% and in particular 12 to 16 wt.-%, based on the total weight of the aqueous reaction mixture.

Preferably, the cationic polymeric dispersant exhibits a degree of polymerization of at least 90%, more preferably at least 95%, still more preferably at least 99%, yet more preferably at least 99.9%, most preferably at least 99.95% and in particular at least 99.99%.

In a preferred embodiment, the cationic polymeric dispersant is a water-soluble polymer having a weight average molecular weight M_{w} of at most 2.0×10⁶ g/mol. Preferably, the weight average molecular weight M_{w} of the cationic polymeric dispersant is within the range of from 50,000 to 1,500,000 g mol⁻¹, more preferably 75,000 to 1,250,000 g mol⁻¹, still more preferably 100,000 to 1,000,000 g mol⁻¹, yet more preferably 120,000 to 750,000 g mol⁻¹, most preferably 140,000 to 400,000 g mol⁻¹ and in particular 150,000 to 200,000 g mol⁻¹. In a preferred embodiment, the weight average molecular weight M_{w} of the cationic polymeric dispersant is within the range of from 75,000 to 350,000 g mol⁻¹.

Preferably, the molecular weight dispersity M_{w}/Mₙ of the cationic polymeric dispersant is within the range of from 1.0 to 4.0, more preferably 1.5 to 3.5 and in particular 1.8 to 3.2. In a preferred embodiment, M_{w}/Mₙ is within the range of from 2.7±0.7, more preferably 2.7±0.5, still more preferably 2.7±0.4, yet more preferably 2.7±0.3, most preferably 2.7±0.2 and in particular 2.7±0.1.

Preferably, the cationic polymeric dispersant has a product viscosity within the range of from 100 to 850 mPas, more preferably 150 to 800 mPas, still more preferably 200 to 750 mPas, yet more preferably 250 to 700 mPas, most preferably 300 to 650 mPas and in particular 350 to 600 mPas.

In a preferred embodiment the cationic polymeric dispersant is a homopolymer or a copolymer. When the cationic polymeric dispersant is a homopolymer, it is derived from a cationic monomer. When the cationic polymeric dispersant is a copolymer, it is preferably derived from at least one cationic monomer and at least one non-ionic co-monomer.

In this regard, "derived from" means that the polymer backbone of the cationic polymeric dispersant comprises repetition units, i.e., repetition units are incorporated in the polymer backbone of the cationic polymeric dispersant, which repetition units are formed from the corresponding monomers in the course of the polymerization reaction. For example, when the cationic polymeric dispersant is derived from dimethylaminopropyl acrylamide quaternized with methylchloride (= DIMAPA quat.), the following repetition unit is incorporated in the polymer backbone:

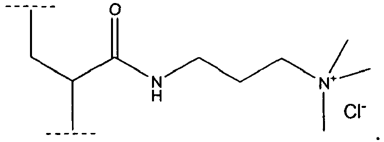

When the cationic polymeric dispersant is a copolymer of at least one cationic monomer (e.g. DIMAPA quat.) and at least one non-ionic co-monomer (e.g. acrylamide), the content of the cationic monomer is preferably at least 50 wt.-%, more preferably at least 60 wt.-%, still more preferably at least 70 wt.-%, yet more preferably at least 80 wt.-%, most preferably at least 90 wt.-% and in particular at least 95 wt.-%, based on the total weight of all monomers incorporated in the cationic polymeric dispersant.

Preferably, the cationic polymeric dispersant is derived from one or more cationic monomers, more preferably from a single cationic monomer.

In a preferred embodiment, the cationic polymeric dispersant is derived from one or more radically polymerizable, ethylenically unsaturated monomers. Preferably, the cationic polymeric dispersant is derived from one or more cationic monomers selected from the group consisting of (alk)acrylamidoalkyltrialkyl ammonium halides, (alk)acryloyloxyalkyl trialkyl ammonium halides, alkenyl trialkyl ammonium halides and dialkenyl dialkyl ammonium halides. Preferably, the aforementioned cationic monomers comprise 6 to 25 carbon atoms, more preferably 7 to 20 carbon atoms, most preferably 7 to 15 carbon atoms and in particular 8 to 12 carbon atoms.

Preferably, the cationic polymeric dispersant is derived from
- 30 to 100 wt.-%, more preferably 50 to 100 wt.-% of (alk)acrylamidoalkyltrialkyl ammonium halides, (alk)acryloyloxyalkyl trialkyl ammonium halides, alkenyl trialkyl ammonium halides, and/or dialkenyl dialkyl ammonium halides, and
- 0 to 70 wt.-%, more preferably 0 to 50 wt.-% of nonionic co-monomers.

In a preferred embodiment, the cationic polymeric dispersant is derived from a dialkenyl dialkyl ammonium halide, preferably a diallyl dimethyl ammonium halide (DADMAC).

In another preferred embodiment, the cationic polymeric dispersant is a copolymerizate of epichlorohydrin and dialkylamine, preferably dimethylamine, i.e. poly-[N,N-dimethyl-2-hydroxy-propylen-(1,3)-ammonium chloride].

In still another preferred embodiment, the cationic polymeric dispersant is derived from a cationic monomer according to general formula (II) 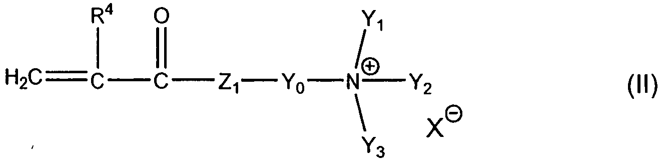 wherein
R⁴ means hydrogen or C₁-C₃-alkyl, preferably H or methyl;
Z₁ means O, NH or NR⁵ with R⁵ being C₁-C₃-alkyl; and
Yo means C₂-C₆-alkylene, possibly substituted with one or more hydroxy groups, preferably C₂-C₃-alkylene,
Y₁, Y₂, Y₃, independently of each other, mean C₁-C₆-alkyl, preferably methyl, and
X⁻ means halogen, pseudo-halogen (e.g. CN⁻, SCN⁻, NCS⁻, N₃⁻), acetate or SO₄CH₃⁻, preferably chloride.

Preferably, Y₁, Y₂ and Y₃ are identical, preferably methyl. In a preferred embodiment, Z₁ is O or NH, Y₀ is ethylene or propylene, R⁴ is hydrogen or methyl, and Y₁, Y₂ and Y₃ are methyl. The monomer according to general formula (II) may be an ester (Z₁ = O), such as dimethylaminoethyl (meth)acrylate quaternized with methylchloride (ADAME quat.). Preferably, however, the monomer according to general formula (I) is an amide (Z₁ = NH), particularly dimethylaminopropyl acrylamide quaternized with methylchloride (DIMAPA quat).

Preferably, quaternized dialkylaminoalkyl (meth)acrylates or dialkylaminoalkyl-(meth)acrylamides with 1 to 3 C atoms in the alkyl or alkylene groups are employed as monomers according to general formula (II), more preferably the methyl chloride-quaternized ammonium salt of dimethylamino methyl(meth)acrylate, dimethylamino ethyl(meth)acrylate, dimethylamino propyl(meth)acrylate, diethylamino methyl(meth)-acrylate, diethylamino ethyl(meth)acrylate, diethylamino propyl(meth)acrylate, dimethylamino methyl(meth)acrylamide, dimethylamino ethyl(meth)acrylamide, dimethylamino propyl(meth)acrylamide, diethylamino methyl(meth)acrylamide, diethylamino ethyl(meth)acrylamide, diethylamino propyl(meth)acrylamide.

It is preferred to use dimethylaminoethyl acrylate and dimethylaminopropyl-acrylamide. Quaternization may be effected using dimethyl sulfate, diethyl sulfate, methyl chloride or ethyl chloride. In a preferred embodiment, monomers quaternized with methyl chloride are used.

When the cationic polymeric dispersant is a copolymer, it is preferably derived from at least one cationic monomer in combination with at least one non-ionic monomer.

Suitable non-ionic monomers include non-ionic monomers according to general formula (III) 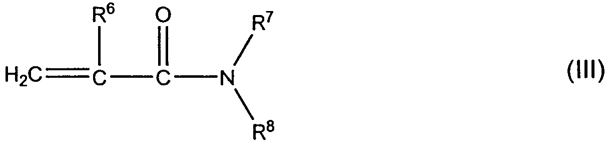 wherein
R⁶ means hydrogen or C₁-C₃-alkyl, preferably hydrogen or methyl; and
R⁷ and R⁸ mean, independently of each other, hydrogen, C₁-C₅-alkyl or C₁-C₅-hydroxyalkyl.

Examples of compounds of general formula (III) include (meth)acrylamide, N-methyl (meth)acrylamide, N-isopropyl(meth)acrylamide or N,N-substituted (meth)acryl amides such as N,N-dimethyl(meth)acrylamide, N,N-diethyl(meth)acrylamide, N-methyl-N-ethyl(meth)acrylamide or N-hydroxyethyl(meth)acrylamide.

Further suitable non-ionic monomers include non-ionic amphiphilic monomers according to general formula (IV) 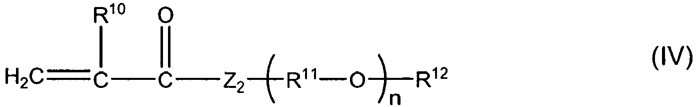 wherein
Z₂ means O, NH or NR⁹ with R⁹ being C₁-C₃-alkyl,
R¹⁰ means hydrogen or C₁-C₃-alkyl,
R¹¹ means C₂-C₆-alkylene,
R¹² means hydrogen, C₈-C₃₂-alkyl, C₈-C₃₂-aryl and/or C₈-C₃₂-aralkyl, and
n means an integer between 1 and 50, preferably 1 and 20.

Examples of amphiphilic monomers of general formula (IV) include reaction products of (meth)acrylic acid and polyethylene glycols (10 to 50 ethylene oxide units), which are etherified with a fatty alcohol, or the corresponding reaction products with (meth)acrylamide.

When co-using additional water-soluble dispersant components in combination with the cationic polymeric dispersant, the weight ratio of the cationic polymeric dispersant to said additional water-soluble dispersant components is preferably within the range of from 1:0.01 to 1:0.5, preferably 1:0.01 to 1:0.3. By way of example, cellulose derivatives, polyvinyl acetates, starch, starch derivatives, dextrans, polyvinylpyrrolidones, polyvinylpyridines, polyethyleneimines, polyamines, polyvinylimidazoles, polyvinylsuccinimides, polyvinyl-2-methylsuccinimides, polyvinyl-1,3-oxazolidin-2-ones, polyvinyl-2-methylimidazolines and/or the respective copolymers thereof with maleic acid, maleic anhydride, fumaric acid, itaconic acid, itaconic anhydride, (meth)acrylic acid, salts of (meth)acrylic acid and/or (meth)acrylamide compounds may be mentioned as additional water-soluble dispersant components.

Besides the cationic polymeric dispersant, the aqueous reaction mixture comprises a monomer composition. The monomer composition contains
a) 45 to 99 mole.% of one or more non-ionic ethylenically unsaturated monomers;
b) 0.001 to 50 mole.-%, preferably 0.001 to 27.5 mole.-%, of one or more cationic ethylenically unsaturated monomers; and
c) 0.001 to 27.5 mole.-% of one or more hydrophobic monomers according to general formula (I);
all percentages being based on the total molar amount of monomers.

In this regard the sum of the three values in mole.-% need not to amount to 100 mole.-%. Rather, further monomers may be contained in the monomer composition, i.e. in the aqueous reaction mixture, which have to be taken into account when determining the total amount of monomers. Preferably, however, the sum of the three values in mole.-% amounts to 100 mole.-%, i.e. no further monomers are present.

The monomer composition contains 45 to 99 mole.-%, preferably 50 to 98 mole.-%, more preferably 60 to 97 mole.-%, still more preferably 70 to 96 mole.-%, yet more preferably 75 to 94 mole.-%, most preferably 80 to 92 mole.-% and in particular 85 to 90 mole.-% of one or more non-ionic ethylenically unsaturated monomers, based on the total molar amount of all monomers. Preferably, the non-ionic ethylenically unsaturated monomers are water-soluble.

Suitable ethylenically unsaturated co-monomers include compounds of general formula (III) and amphiphilic compounds of general formula (IV), as defined supra. Preferably, the one or more ethylenically unsaturated co-monomers comprise (alk)acrylamide, more preferably acrylamide.

Preferably, the non-ionic monomer is selected from the group consisting of (meth)-acrylamide, N-methyl(meth)acrylamide, N-isopropyl(meth)acrylamide, N,N-dimethyl-(meth)acrylamide, N,N-diethyl(meth)acrylamide, N-methyl-N-ethyl(meth)acrylamide and N-hydroxyethyl(meth)acrylamide.

The monomer composition further contains 0.001 to 50 mole.-%, preferably 0.001 to 45 mole.-%, 0.001 to 40 mole.-%, 0.001 to 35 mole.-%, 0.001 to 30 mole.-%, or 0.001 to 27.5 mole.%, preferably 0.1 to 25 mole.-%, more preferably 1.0 to 22.5 mole.-%, still more preferably 5.0 to 20 mole.%, yet more preferably 7.0 to 17.5 mole.-%, most preferably 8.0 to 15 mole.-% and in particular 9.0 to 13 mole.-% of one or more cationic ethylenically unsaturated monomers, based on the total molar amount of all monomers. Preferably, the one or more cationic ethylenically unsaturated monomers are water-soluble.

Preferably, the cationic ethylenically unsaturated monomer is a monomer according to general formula (II) as defined supra. The cationic ethylenically unsaturated monomer according to general formula (II) may be an amide (Z₁ = NH), e.g., dimethylaminopropyl acrylamide quaternized with methylchloride (DIMAPA quat). Preferably, however, the cationic ethylenically unsaturated monomer according to general formula (II) is an ester (Z₁ = O), particularly dimethylaminoethyl (meth)-acrylate quaternized with methylchloride (ADAME quat.).

Preferred cationic ethylenically unsaturated monomers are cationic radically polymerizable (alk)acrylic acid esters, (alk)acrylic acid thioesters and (alk)acrylic acid amides. Preferably, the aforementioned cationic monomers comprise 6 to 25 carbon atoms, more preferably 7 to 20 carbon atoms, most preferably 7 to 15 carbon atoms and in particular 8 to 12 carbon atoms. Still more preferably, the cationic ethylenically unsaturated monomer according to general formula (II) is selected from the group consisting of methyl chloride quaternized ammonium salts of dimethylaminomethyl-(meth)acrylate, dimethylaminoethyl(meth)acrylate, dimethylaminopropyl(meth)-acrylate, dimethylaminomethyl(meth)acrylamide, dimethylaminoethyl(meth)acrylamide and dimethylaminopropyl(meth)acrylamide.

Preferably, the radical reactivity ratios of the cationic ethylenically unsaturated monomer r₁ and of the non-ionic ethylenically unsaturated co-monomer r₂ are each within the range of from 0.01 to 100, more preferably 0.02 to 50, still more preferably 0.05 to 20, most preferably 0.1 to 10 and in particular 0.2 to 5. In this context, r₁ is defined as the ratio of two propagation constants involving a radical of the cationic ethylenically unsaturated monomer: The ratio always compares the propagation constant for the monomer of the same type adding to the radical (k₁₁) relative to the propagation constant for the addition of the comonomer (k₁₂), i.e., r₁ = k₁₁/k₁₂. In analogy, r₂ = k₂₂/k₂₁. For further details it can be referred e.g. to Paul C. Hiemenz, Polymer Chemistry, Marcel Dekker New York, 1984, Chapter 7.2.

When the cationic polymeric dispersant is also derived from a cationic ethylenically unsaturated monomer, said cationic ethylenically unsaturated monomer may be different from or identical with the cationic ethylenically unsaturated monomer contained in the monomer composition, i.e. in the aqueous reaction mixture. Preferably, both monomers differ from one another so that the repetition units of the cationic copolymer differ from the repetition units of the cationic polymeric dispersant. Thus, the cationic polymeric dispersant and the cationic copolymer preferably differ from each other, said difference possibly involving physical variables such as different molecular weight and/or chemical structure, as well as different monomer composition.

The monomer composition further contains 0.001 to 27.5 mole.-%, preferably 0.01 to 17.5 mole.-%, more preferably 0.05 to 10 mole.-%, still more preferably 0.1 to 5.0 mole.-%, yet more preferably 0.15 to 2.0 mole.-%, most preferably 0.2 to 1.5 mole.-% and in particular 0.25 to 1.3 mole.-% of one or more hydrophobic monomers according to general formula (I) (= "hydrophobic monomers") 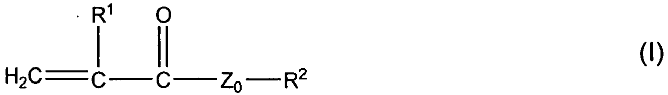 wherein
R¹ means hydrogen or C₁-C₃-alkyl, preferably hydrogen or methyl;
R² means C₅-C₂₄-alkyl, preferably C₆-C₂₃-alkyl, more preferably C₇-C₂₂-alkyl, still more preferably C₈-C₂₁, yet more preferably C₉-C₂₀-alkyl, most preferably C₁₀-C₁₉-alkyl and in particular C₁₀-C₁₆-alkyl; and
Z₀ means O, NH or NR³ with R³ being C₁-C₃-alkyl, preferably O or NH;

Preferably, the hydrophobic monomer according to general formula (I) is a (meth)acrylic acid ester of a preferably saturated fatty alcohol or a (meth)acrylic acid amide of a preferably saturated fatty amine. In this regard, fatty alcohols and fatty amines are the alcohols and amines, respectively, derived from monocarboxylic acids having at least 5 carbon atoms (e.g. stearic acid -> stearic alcohol and stearic amine, respectively).

In a preferred embodiment the (meth)acrylic acid ester of a preferably saturated fatty alcohol is selected from the group consisting of pentyl(meth)acrylate, hexyl(meth)-acrylate, cyclohexyl(meth)acrylate, heptyl(meth)acrylate, octyl(meth)acrylate, 2-ethyl-hexyl(meth)acrylate, cyclooctyl(meth)acrylate, nonyl(meth)acrylate, decyl(meth)-acrylate, isodecyl(meth)acrylate, undecyl(meth)acrylate, lauryl(meth)acrylate, tridecyl(meth)acrylate, myristyl(meth)acrylate, pentadecyl(meth)acrylate, palmityl-(meth)acrylate, heptadecyl(meth)acrylate, stearyl(meth)acrylate and eicosyl(meth)acrylate.

In another preferred embodiment, the (meth)acrylic acid amide of a preferably saturated fatty amine is selected from the group consisting of (meth)acryl pentyl amide, (meth)acryl hexyl amide, (meth)acryl cyclohexyl amide, (meth)acryl heptyl amide, (meth)acryl octyl amide, (meth)acryl 2-ethyl-hexyl amide, (meth)acryl cyclooctyl amide, (meth)acryl nonyl amide, (meth)acryl decyl amide, (meth)acryl isodecyl amide, (meth)acryl undecyl amide, (meth)acryl lauryl amide, (meth)acryl tridecyl amide, (meth)acryl myristyl amide, (meth)acryl pentadecyl amide, (meth)acryl palmityl amide, (meth)acryl heptadecyl amide, (meth)acryl stearyl amide and (meth)acryl eicosyl amide.

In a preferred embodiment of the aqueous reaction mixture according to the invention,
- the cationic polymeric dispersant is a cationic polymer derived from at least one monomer selected from the group consisting of trimethylammoniumalkyl(meth)-acrylate halides, trimethylammoniumalkyl(meth)acrylamide halides and diallyldialkylammonium halides;
- the cationic ethylenically unsaturated monomer is selected from the group consisting of trimethylammoniumalkyl(meth)acrylate halides, trimethyl-ammoniumalkyl(meth)acrylamide halides and diallyldialkylammonium halides; and/or
- the non-ionic ethylenically unsaturated monomer is (meth)acrylamide; and/or
- the hydrophobic monomer is a (meth)acrylester of a fatty alcohol (C₉-C₂₀).

In a particularly preferred embodiment of the aqueous reaction mixture according to the invention,
- the cationic polymeric dispersant is derived from one or more monomers comprising an (alk)acrylamidoalkyltrialkyl ammonium halide;
- the cationic ethylenically unsaturated monomer is an (alk)acryloyloxyalkyl trialkyl ammonium halide;
- the non-ionic ethylenically unsaturated monomer is an (alk)acrylamide; and/or
- the hydrophobic monomer is a (alk)acrylester of a fatty alcohol (C₉-C₂₀).

Preferably, the aqueous reaction mixture does not contain branching agents and cross-linkers such that the resulting cationic copolymer is substantially free of branching. For example, the aqueous reaction mixture preferably does not contain any monomers having more than one radically polymerizable ethylenically unsaturated moiety. Therefore, the cationic copolymer that is polymerized from the monomer composition in the presence of the cationic polymeric dispersant is preferably substantially un-branched and substantially un-crosslinked.

However, this does not mean that branching reactions that might take place e.g. due to radical termination reactions are completely excluded. For example, when the propagating radical chain abstracts a proton from a polymer backbone, polymerization of this chain is terminated but a new radical is generated which in turn might originate a new propagating radical, thereby leading to a branching point.

The method according to the invention includes the step of subjecting an aqueous reaction mixture to a free radical polymerization reaction. Usually, before the free radical polymerization reaction is initiated, the aqueous reaction mixture is prepared from its components.

The preparation of aqueous reaction mixtures is known to the skilled person. The components may be added simultaneously or consecutively.

Preferably, the water-soluble components are mixed separately (pre-dispersion) and afterwards combined with an emulsified mixture of the hydrophobic monomer (pre-emulsion) in order to yield the aqueous reaction mixture.

The components may be added by conventional means, e.g. by pouring or dropping liquids, by dosing powders.

Preferably, an aqueous pre-dispersion is prepared comprising the cationic polymeric dispersant, the cationic ethylenically unsaturated monomer and the non-ionic ethylenically unsaturated monomer, preferably in homogeneous aqueous solution (pre-solution). Prior to combining said aqueous pre-dispersion with the pre-emulsion, further components may be added to the pre-dispersion, such as chelating agents, buffers (acids and/or bases), branching agents, cross-linkers, chain transfer agents, and the like.

Suitable branching agents, cross-linkers and chain transfer agents are known to the skilled person. Preferably, however, no branching agents, cross-linkers or chain transfer agents are added.

In a preferred embodiment, the pH of the pre-dispersion is adjusted to a value within the range of from 1.0 to 5.0, more preferably 1.5 to 4.5, still more preferably 2.0 to 4.0, and most preferably 2.5 to 3.5. In another preferred embodiment, the pH is adjusted to a value within the range of from 2.0 to 6.0, more preferably 2.5 to 5.5, still more preferably 3.0 to 5.0, and most preferably 3.5 to 4.5. The pH value may be adjusted by means of suitable acids and bases, respectively. Preferred acids are organic acids and mineral acids, such as formic acid, acetic acid, hydrochloric acid and sulfuric acid.

Preferably, the pre-emulsion, i.e. the emulsified mixture of the hydrophobic monomer, comprises water, the hydrophobic monomer and a suitable emulsifier.

The emulsifier may be added to the aqueous reaction mixture or to the pre-emulsion which is combined with the pre-dispersion in order to yield the aqueous reaction mixture.

An emulsifier is a substance which stabilizes an emulsion, frequently a surfactant. Preferably, the emulsifier has a HLB (hydrophilic-lipophilic balance) value of at least 15, more preferably at least 16, still more preferably at least 17, most preferably at least 18 and in particular at least 19 (for the definition of the HLB value, see W.C. Griffin, Journal of the Society of the Cosmetic Chemist, 1 (1950), 311). Preferably, the content of the emulsifier is within the range of from 0.01 to 25 wt.-%, more preferably 1.0 to 15 wt.-%, still more preferably 2.0 to 10 wt.-%, yet more preferably 3.0 to 9.0 wt.-%, most preferably 4.0 to 8.0 wt.-% and in particular 5.0 to 7.0 wt.-%, based on the total weight of the pre-emulsion.

Suitable emulsifiers are known to the skilled artisan. Anionic, cationic, zwitterionic or non-ionic surfactants may be used as emulsifier, anionic surfactants being preferred. Examples of suitable emulsifiers include sodium dodecylsulfate (SDS) (e.g. Marlon AS 3 acid), sodium dodecylbenzene sulfonate (SDBS), sodium lauryl sulfate (SLS), aliphatic sulfosuccinates and phenyl-ended sulfotricarballylates.

Prior to combining the pre-dispersion and the pre-emulsion, further components may be added to the pre-emulsion, such as further anionic, cationic, zwitterionic or non-ionic surfactants or polymer emulsifiers.

Preferably, the pre-emulsion is added to the pre-dispersion under vigorous stirring which may be effected, e.g., by a conventional spiral-stirrer, high-speed mixer, homogenizer.

In principle, it is not necessary that the entire amount of each component is initially present when the aqueous reaction mixture is prepared. Alternatively, partial dispersion of the monomers can be effected at the beginning of the polymerization, the remainder of the monomers being added as metered portions or as a continuous feed distributed over the entire course of polymerization. For example, only a certain portion of a particular component, e.g., only 70 wt.-% of the cationic ethylenically unsaturated monomer, may be initially employed, and thereafter, possibly in the course of the polymerization reaction, the remainder of said particular component, e.g., the residual 30 wt.-% of the cationic ethylenically unsaturated monomer, is employed.

In a preferred embodiment of the method according to the invention, before the aqueous reaction mixture is subjected to a radical polymerization, a water-soluble salt is added in quantities of 0.1 to 5.0 wt.-%, based on the total weight of the aqueous reaction mixture.

Ammonium, alkali metal and/or alkaline earth metal salts, preferably ammonium, sodium, potassium, calcium and/or magnesium salts, can be used as water-soluble salts. Such salts can be salts of an inorganic acid or of an organic acid, preferably of an organic carboxylic acid, sulfonic acid, phosphonic acid, or of a mineral acid. The water-soluble salts are preferably salts of an aliphatic or aromatic mono-, di-, polycarboxylic acid, of a hydroxycarboxylic acid, preferably of acetic acid, propionic acid, citric acid, oxalic acid, succinic acid, malonic acid, adipic acid, fumaric acid, maleic acid or benzoic acid, or sulfuric acid, hydrochloric acid or phosphoric acid. Very particularly preferably, sodium chloride, ammonium sulfate and/or sodium sulfate are used as water-soluble salts.

The salts can be added before, during or after polymerization, polymerization preferably being carried out in the presence of a water-soluble salt.

After the aqueous reaction mixture has been prepared, it is subjected to a free radical polymerization reaction, i.e., polymerization of the monomer composition containing the cationic ethylenically unsaturated monomers, the non-ionic ethylenically unsaturated monomers and the hydrophobic monomers in the presence of the cationic polymeric dispersant is initiated, thereby yielding the cationic copolymer dispersed in the water-in-water polymer dispersion.

The skilled person knows how to radically polymerize monomers in an aqueous reaction mixture. Typically, the polymerization reaction is carried out in the presence of one ore more conventional polymerization initiators.

Radicals may be formed, e.g., upon thermally induced or photochemically induced homolysis of single bonds or redox reactions.

Examples of suitable water-soluble initiators include, e.g., 2,2'-azobis-(2-amidino-propane) dihydrochloride, 4,4'-azobis-(4-cyanopentanoic acid), 2,2'-azobis(2-(-imidazolin-2-yl)propane dihydrochloride or redox systems such as ammonium persulfate/ferric sulfate. Oil-soluble initiators include, e.g., dibenzoyl peroxide, dilauryl peroxide or tert-butyl peroxide, or azo compounds such as 2,2'-azobisisobutyronitrile, dimethyl 2,2'-azobisisobutyrate and 2,2'-azobis-(4-methoxy-2, 4-dimethylvaleronitrile). The initiators may be used either individually or in combinations and generally in an amount of about 0.015 to 0.5% by weight of the total weight of the aqueous reaction mixture. The skilled person principally knows how to modify the amount and type of the initiator in order to modify the properties of the resultant polymer product, e.g., its average molecular weight.

Preferably, azo compounds such as 2,2'-azobisisobutyronitrile, 2,2'-azobis(2-(-imidazolin-2-yl)propane dihydrochloride, 2,2'-azobis(2-aminopropane) dihydrochloride or preferably potassium persulfate, ammonium persulfate, hydrogen peroxide, optionally in combination with a reducing agent, e.g. an amine or sodium sulfite, are used as radical initiators. The amount of initiator, relative to the monomers to be polymerized, generally ranges from 10⁻³ to 1.0 wt.-%, preferably from 10⁻² to 0.1 wt.-%. The initiators can be added completely or also only in part at the beginning of the polymerization, with subsequent apportioning of the residual amount over the entire course of polymerization. In a preferred embodiment, the polymerization is initiated by means of a sodiumperoxodisulfate and, after reaching the maximum temperature, continued with an azo initiator, such as 2,2'-azobis(2-(-imidazolin-2-yl)propane dihydrochloride. At the end of the polymerization, a redox initiator system is preferably added in order to reduce the content of residual monomers.

In another advantageous embodiment, once the exothermic polymerization reaction is complete, i.e. generally after the temperature maximum, the content of residual monomers is further reduced by subsequent addition of redox initiator.

In another advantageous embodiment of the method according to the invention, the monomer composition and the cationic polymeric dispersant is apportioned into the polymerization reactor during polymerization. In general, a portion, e.g. 10 to 20% of the monomers and the cationic polymeric dispersant, is initially introduced. Following initiation of polymerization, the above-mentioned apportioning is effected, optionally accompanied by further apportioning of polymerization initiator.

In addition, it is also possible to remove water during polymerization and optionally to add further cationic polymeric dispersant.

The polymerization temperature generally is 0 to 120°C, preferably 30 to 90°C. The polymerization temperature can be selected based on the decomposition kinetics of the initiator used.

Polymerization times are the same as those conventionally used in the art, generally 1.5 to 18 hours and preferably 2 to 6 hours, although as little as one-half hour could be used. However, attempting more rapid polymerization over a shorter period of time creates problems with removing heat. In this regard it is greatly preferred that the polymerization medium be stirred well or otherwise agitated during the polymerization.

The equipment utilized for the polymerization can simply be standard reactors such as used for oil-in-water or water-in-oil or water-in-water polymerizations.

Polymerization conversion or the end of polymerization can easily be detected by determining the content of residual monomers. Methods for this purpose are familiar to those skilled in the art (e.g. HPLC).

The polymerization is preferably carried out in such a way that the system is purged with an inert gas and polymerized under an inert gas atmosphere, e.g. under a nitrogen atmosphere.

Preferably, the method according to the invention comprises the steps of
(1) preparing an aqueous pre-emulsion containing the one or more hydrophobic monomers according to general formula (I) and an emulsifier;
(2) preparing an aqueous pre-dispersion containing the cationic polymeric dispersant, the one or more non-ionic ethylenically unsaturated monomers, and the cationic ethylenically unsaturated monomers;
(3) degassing the aqueous pre-dispersion obtained in step (2);
(4) combining the aqueous pre-emulsion obtained in step (1) and the degassed aqueous pre-dispersion obtained in step (3); and
(5) subjecting the aqueous reaction mixture obtained in step (4) to the free radical polymerization reaction.

Degassing in step (3) principally means "deoxygenating", which may be performed, e.g. by purging nitrogen through the mixture.

It has been found that when degassing the overall aqueous reaction mixture, a substantial amount of the hydrophobic monomer is expelled by the gas stream. Surprisingly, this can be avoided when the aqueous pre-dispersion is degassed in the absence of the hydrophobic monomer and the pre-emulsion containing the hydrophobic monomer is added thereafter, without substantially deteriorating the outcome of the polymerization reaction. Furthermore, the separate formation of the aqueous pre-emulsion containing the hydrophobic monomers and the emulsifier has the beneficial effect that the finally dispersed polymerization product is clearer than the product that is obtained when directly dosing the hydrophobic monomer to the aqueous reaction mixture. The clearer the dispersion, the more homogeneous the distribution of its components and the better its performance as flocculant, drainage aid and dewatering aid.

Following polymerization, it can be advantageous to cool down the aqueous reaction mixture before optionally adding further additives, such as salts or acids, to the dispersion, preferably with stirring.

To reduce the residual monomer content, it is also possible to increase the temperature during the course of the polymerization. Alternatively, it is also possible to use additional initiators during and at the end of the polymerization and/or residual monomer destructors.

Residual monomer destructors within the meaning of the invention are substances that modify polymerizable monomers by means of a chemical reaction in such a way that they are no longer polymerizable, such that within the meaning of the invention they are no longer monomers. Substances that react with the double bond present in the monomers and/or substances that can initiate a more extensive polymerization can be used for this purpose. As residual monomer destructors that react with the double bond, reducing agents can for example be used, preferably substances from the group of acids and neutral salts of acids derived from sulfur having an oxidation number lower than VI, preferably sodium dithionite, sodium thiosulfate, sodium sulfite or sodium disulfite, and/or substances having a hydrogen sulfide group, preferably sodium hydrogen sulfide or compounds from the group of thiols, preferably mercaptoethanol, dodecyl mercaptan, thiopropionic acid or salts of thiopropionic acid or thiopropanesulphonic acid or salts of thiopropanesulphonic acid, and/or substances from the group of amines, preferably from the group of amines with low volatility, preferably diisopropanolamine or aminoethyl ethanolamine, and/or substances from the group comprising Bunte salts, formamidine sulfinic acid, sulfur dioxide, aqueous and organic solutions of sulfur dioxide or thio urea.

Preferably, the water-in-water polymer dispersion has a residual content of cationic ethylenically unsaturated monomers of at most 5,000 ppm, more preferably at most 2,500 ppm, still more preferably at most 1,000 ppm, yet more preferably at most 800 ppm, most preferably at most 600 ppm an in particular at most 400 ppm.

Preferably, the water-in-water polymer dispersion has a residual content of non-ionic ethylenically unsaturated monomers of at most 5,000 ppm, more preferably at most 2,500 ppm, still more preferably at most 1,000 ppm, yet more preferably at most 800 ppm, most preferably at most 600 ppm an in particular at most 400 ppm.

Preferably, the water-in-water polymer dispersion has a residual content of hydrophobic monomers of at most 5,000 ppm, more preferably at most 2,500 ppm, still more preferably at most 1,000 ppm, yet more preferably at most 800 ppm, most preferably at most 600 ppm an in particular at most 400 ppm.

The polymerization reaction transforms the aqueous reaction mixture into a water-in-water polymer dispersion.

After the polymerization reaction, the resultant water-in-water polymer dispersion may be distillated in order to reduce the content of the solvent.

In a preferred embodiment of the method according to the invention, acid is added after polymerization in quantities of 0.1 to 5.0 wt.-%, based on the total weight of the aqueous reaction mixture. Water-soluble organic acids and/or inorganic acids can be present. More specifically, suitable organic water-soluble acids are organic carboxylic acids, sulfonic acids, phosphonic acids, preferably aliphatic or aromatic mono-, di-, polycarboxylic acids and/or hydroxycarboxylic acids, preferably acetic acid, propionic acid, citric acid, oxalic acid, succinic acid, malonic acid, adipic acid, fumaric acid, maleic acid, benzoic acid, especially preferably citric acid, adipic acid and/or benzoic acid. Suitable inorganic acids are water-soluble mineral acids, preferably hydrochloric acid, sulfuric acid, nitric acid and/or phosphoric acid. Very particularly preferred are citric acid, adipic acid, benzoic acid, hydrochloric acid, sulfuric acid and/or phosphoric acid.

Preferably, the aqueous reaction mixture contains 0.5 to 5.0 wt.-% of at least one acid and/or 0.5 to 5.0 wt.-% of at least one salt, the overall content of acid and salt preferably amounting to 5.0 wt.-%, based on the total weight of the dispersion. Preferably, when a salt as well as an acid are present, the anion of the salt differs from the chemical nature of the acid, i.e. when the acid is citric acid, the salt is no citric acid salt.

A further aspect of the invention relates to a water-in-water polymer dispersion comprising water, a cationic polymeric dispersant and a cationic copolymer.

The water-in-water polymer dispersion comprises
(i) a cationic polymeric dispersant and
(ii) a cationic copolymer derived from a monomer composition containing
   a) 45 to 99 mole.-% of one or more non-ionic ethylenically unsaturated monomers, based on the total molar amount of monomers; and
   b) 0.001 to 50 mole.-%, preferably 0.001 to 27.5 mole.-%, of one or more cationic ethylenically unsaturated monomers, based on the total molar amount of monomers; and
   c) 0.001 to 27.5 mole.-% of one or more hydrophobic monomers according to general formula (I) 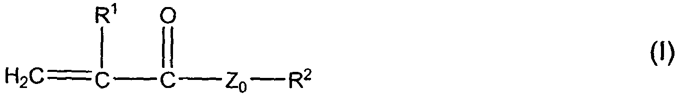
wherein
R¹ means hydrogen or C₁-C₃-alkyl;
R² means C₅-C₂₄-alkyl; and
Z₀ means O, NH or NR³ with R³ being C₁-C₃-alkyl, based on the total molar amount of monomers.

Preferably, the water-in-water polymer dispersion is obtainable by the method according to the invention described above.

The water-in-water polymer dispersions according to the invention may be water-in-water polymer suspensions, water-in-water polymer emulsions, water-in-water polymer solutions or mixtures thereof.

Preferably, the water-in-water polymer dispersion contains 0.00005-5.0 wt.-%, more preferably 0.0001-2.5 wt.-%, still more preferably 0.0005-1.0 wt.-%, yet more preferably 0.001-0.5 wt.-%, most preferably 0.005-0.2 wt.-% and in particular 0.01-0.1 wt.-% of one or more emulsifier(s), as defined above, based on the total weight of the water-in-water polymer dispersion.

In a preferred embodiment of the water-in-water polymer dispersion according to the invention the weight average molecular weight M_{w} of the cationic copolymer, which is preferably substantially un-branched and un-crosslinked, is higher than the weight average molecular weight M_{w} of the cationic polymeric dispersant. The skilled person knows how to measure and to influence the weight average molecular weight of the cationic copolymer, e.g. by modifying the initiator concentration, the addition of chain-transfer agents.

Preferably, the weight average molecular weight is determined by gelpermeation chromatography (GPC), preferably using 1.5% formic acid as eluent versus pullulan standards, or rheological measurements.

Preferably, the cationic copolymer exhibits a degree of polymerization of at least 90%, more preferably at least 95%, still more preferably at least 99%, yet more preferably at least 99.9%, most preferably at least 99.95% and in particular at least 99.99%.

Preferably, the weight average molecular weight of the cationic copolymer, which is preferably substantially un-branched and un-crosslinked, is at least 1,000,000 g mol^{-**1**}, more preferably at least 1,250,000 g mol⁻¹, still more preferably at least 1,500,000 g mol⁻', yet more preferably at least 1,750,000 g mol⁻¹, most preferably at least 2,000,000 g mol⁻¹ and in particular at least 2,500,000 g mol⁻¹.

Preferably, the molecular weight dispersity M_{w}/Mₙ of the cationic copolymer, which is preferably substantially un-branched and un-crosslinked, is within the range of from 1.0 to 4.0, more preferably 1.5 to 3.5 and in particular 1.8 to 3.2. In a preferred embodiment, M_{w}/Mₙ is within the range of from 2.7±0.7, more preferably 2.7±0.5, still more preferably 2.7±0.4, yet more preferably 2.7±0.3, most preferably 2.7±0.2 and in particular 2.7±0.1.

Preferably, the content of the cationic copolymer is within the range of from 0.1 to 90 wt.-%, more preferably 1.0 to 80 wt.-%, still more preferably 2.5 to 70 wt.-%, yet more preferably 5.0 to 60 wt.%, most preferably 10 to 40 wt.-% and in particular 15 to 25 wt.-%, based on the total weight of the water-in-water polymer dispersion.

In a preferred embodiment, the relative weight ratio of the cationic copolymer to the cationic polymeric dispersant is within the range of from 10:1 to 0.1:1, more preferably 9:1 to 0.25:1, still more preferably 8:1 to 0.5:1, yet more preferably 7:1 to 1:1, most preferably 6:1 to 2:1 and in particular 5:1 to 3:1. In another preferred embodiment, the relative weight ratio of the cationic copolymer to the cationic polymeric dispersant is within the range of from 9:1 to 0.05:1, more preferably 7:1 to 0.1:1, still more preferably 5:1 to 0.3:1, yet more preferably 3:1 to 0.5:1, most preferably 2:1 to 1:1 and in particular 1.5:1 to 1.2:1.

Preferably, the weight average molecular weight M_{w} of the polymer mixture present in the water-in-water polymer dispersion, comprising the cationic copolymer and the cationic polymeric dispersant, is in a range above 1.5 10⁶ g/mol, as measured according to the GPC method.

Preferably, the cationic copolymer, which is preferably substantially un-branched and un-crosslinked, is water-soluble or water-swellable.

Preferably, the water-in-water polymer dispersion according to the invention has
- a solution viscosity (according to Brookfield) within the range of from 500 to 5,000 mPas, more preferably 800 to 3,000 mPas, still more preferably 1,000 to 2,500 mPas, most preferably 1,200 to 2,000 mPas and in particular 1,400 to 1,800 mPas; and/or
- a product viscosity within the range of from 1,000 to 50,000 mPas, more preferably 5,000 to 30,000 mPas, still more preferably 8,000 to 25,000 mPas, most preferably 10,000 to 20,000 mPas and in particular 12,000 to 19,000 mPas; and/or
- a salt viscosity within the range of from 300 to 1,000 mPas, more preferably 350 to 900 mPas, still more preferably 400 to 850 mPas, most preferably 450 to 800 mPas and in particular 500 to 750 mPas.

Preferably, the water-in-water polymer dispersion according to the invention exhibits a tan delta value at 0.005 Hz (0.00464 Hz) in 0.5 wt.-% solution at 25°C within the range of from 4.0 to 12.0, more preferably 4.5 to 10.0, most preferably 5.0 to 9.0.

In a preferred embodiment, the hydrophobic monomer according to general formula (I) is selected such that the tan delta value of the water-in-water polymer dispersion according to the invention at 0.005 Hz (0.00464 Hz) in 0.5 wt.-% solution at 25°C is lower than the tan delta value of a comparative water-in-water polymer dispersion that is obtained under exactly the same reaction conditions except that the hydrophobic monomer according to general formula (I) has been replaced by an equimolar amount of n-butylacrylate (R² = n-butyl). In this embodiment, tan delta of the water-in-water polymer dispersion according to the invention is preferably at least 1%, more preferably at least 2%, still more preferably at least 3%, yet more preferably at least 4%, most preferably at least 5% and in particular at least 10% decreased with respect to said comparative water-in-water polymer dispersion. In another preferred embodiment, tan delta of the water-in-water polymer dispersion according to the invention is preferably at most 12%, more preferably at most 11%, still more preferably at most 10%, yet more preferably at most 9%, most preferably at most 8% and in particular at most 7% decreased with respect to said comparative water-in-water polymer dispersion.

Tan delta is a measure of viscoelasticity. The value of tan delta is the ratio of the loss (viscous) modulus G" to storage (elastic) modulus G' within the system. G' and G" measurements are recorded and used to calculate tan delta (G"/G') values. On the one hand, at equivalent stress, materials with a low tan delta (<1) and higher G' value strain or deform less, thus exhibiting a stronger associated structure. These materials are mechanically stable and do not relax within the time frame or at the frequency of the measurement. Such materials are thus more elastic. On the other hand, at equivalent stress, materials with a higher tan delta value (>1) and higher G" value exhibit a viscous type of response and the stress of the sample will permit a linear polymer to relax at a low frequency. It has been surprisingly found that when varying the chain length of the hydrophobic moiety of the hydrophobic monomer according to general formula (I) (=R²), the tan delta value of the water-in-water polymer dispersion may be decreased. In other words, viscoelasticity of the system may be triggered by the chemical nature of the hydrophobic monomer.

The skilled person knows how to determine the tan delta value. Preferably, the tan delta at 0.005 Hz value is obtained using a rheometer in oscillation mode on a 0.5% by weight aqueous solution of polymer in deionized water after tumbling for two hours.

Preferred embodiments A to D of the water-in-water polymer dispersion according to the invention are summarized in the table here below:

| component | A | B | C | D |
|---|---|---|---|---|
| cationic polymeric dispersant derived from | monomer according to formula (II) | monomer according to formula (II) where Z₁ means NH | (alk)acrylamidoalkyl trialkyl ammonium halide | DIMAPA quat. |
| substantially un-branched and un-crosslinked cationic copolymer derived from a) + b) + c): | | | | |
| a) cationic ethylenically unsaturated monomer | monomer according to formula (II) | monomer according to formula (II) where Z₁ means O | (alk)acryloyloxyalkyl trialkyl ammonium halide | ADAME quat. |
| b) non-ionic ethylenically unsaturated monomer | monomer according to formula (III) or (IV) | monomer according to formula (III) | (alk)acrylamide | acrylamide |
| c) hydrophobic monomer | monomer according to formula (I) | monomer according to formula (II) where Z₀ means O | monomer according to formula (I) where Z₀ means O and R2 means C₉-C₂₀ alkyl | isodecylmethacrylate |

Preferred variants 1 to 6 of the embodiments A to D are summarized in the table here below:

| component | 1 | 2 | 3 | 4 | 5 | 6 |
|---|---|---|---|---|---|---|
| water | 10 to 90 wt.-% | 15 to 85 wt.-% | 20 to 80 wt.-% | 25 to 75 wt.-% | 55 to 70 wt.-% | 60 to 66 wt.-% |
| emulsifier(s) | 0.00005-5.0 wt.-% | 0.0001-2.5 wt.-% | 0.0005-1.0 wt.-% | 0.001-0.5 wt.-% | 0.005-0.2 wt.-% | 0.01-0.1 wt.-% |
| cationic polymeric dispersant(s) | 0.1 to 40 wt.% | 0.5 to 35 wt.-% | 1.0 to 30 wt.-% | 5.0 to 25 wt.-% | 10 to 20 wt.-% | 12 to 16 wt.-% |
| cationic copolymer derived from a) + b) + c) | 0.1 to 90 wt.-% | 1.0 to 80 wt.-% | 2.5 to 70 wt.-% | 5.0 to 60 wt.-% | 10 to 40 wt.-% | 15 to 25 wt.-% |
| a) cationic ethylenically unsaturated monomer(s) | 0.1 to 25 mole.-% | 1.0 to 22.5 mole.-% | 5.0 to 20 mole.-% | 7.0 to 17.5 mole.-% | 8.0 to 15 mole.-% | 9.0 to 13 mole.-% |
| b) non-ionic ethylenically unsaturated monomer(s) | 50 to 98 mole.-% | 60 to 97 mole.-% | 70 to 96 mole.-% | 75 to 94 mole.-% | 80 to 92 mole.-% | 85 to 90 mole.-% |
| c) hydrophobic monomer(s) | 0.01 to 17.5 mole.-% | 0.05 to 10 mole.-% | 0.1 to 5.0 mole.-% | 0.15 to 2.0 mole.-% | 0.2 to 1.5 mole.-% | 0.25 to 1.3 mole.-% |

In the above table, all percentages by weight (wt.-%) are based on the total weight of the water-in-water polymer dispersion and all percentages by mole (mole.-%) are based on the total molar amount of monomers forming the cationic copolymer.

Preferred components of the water-in-water polymer dispersion and their respective content result from the following combinations of embodiments A to D with variants 1 to 6: A¹, A², A³, A⁴, A⁵, A⁶, B¹, B², B³, B⁴, B⁵, B⁶, C¹, C², C³, C⁴, C⁵, C⁶, D¹, D², D³, D⁴, D⁵, and D⁶. For example, "C⁴" means a combination of embodiment C with variant 4, i.e., a water-in-water polymer dispersion containing 25-75 wt.-% water; 0.001-0.5 wt.-% of at least one emulsifier; 5.0-25 wt.-% of at least one cationic polymeric dispersant derived from (alk)acrylamidoalkyl trialkyl ammonium halide; 5.0 to 60 wt.-% of at least one cationic copolymer derived from a) 7.0-17.5 mole.-% of at least one (alk)acryloyloxyalkyl trialkyl ammonium halide, b) 75-94 mole.-% of at least one (alk)acrylamide, c) 0.15 to 2.0 mole.-% of at least one hydrophobic monomer according to formula (I) where R² means C₉-C₂₀-alkyl.

Preferably, the water-in-water polymer dispersions according to the invention are liquid. In comparison to powders and pastes, liquid dispersions are easier to dose. Powders usually require expensive dosing equipment.

The water content of the water-in-water polymer dispersion may be as it is after in situ polymerization. In a preferred embodiment, however, the water content is reduced, e.g. by vaporizing a portion of the water.

In a preferred embodiment the water content of the water-in-water polymer dispersion is within the range of 40±25 wt.-%, more preferably 40±20 wt.-%, still more preferably 40±15 wt.%, yet more preferably 40±10 wt.%, most preferably 40±7.5 wt.-% and in particular 40±5 wt.-%. In another preferred embodiment the water content of the water-in-water polymer dispersion is within the range of 50±25 wt.-%, more preferably 50±20 wt.-%, still more preferably 50±15 wt.-%, yet more preferably 50±10 wt.-%, most preferably 50±7.5 wt.-% and in particular 50±5 wt.-%. In still another preferred embodiment the water content of the water-in-water polymer dispersion is within the range of 60±25 wt.-%, more preferably 60±20 wt.-%, still more preferably 60±15 wt.-%, yet more preferably 60±10 wt.-%, most preferably 60±7.5 wt.-% and in particular 60±5 wt.-%. In still another preferred embodiment, the water content of the water-in-water polymer dispersion is within the range of 63±20 wt.-%, more preferably 63±15 wt.-%, still more preferably 63±10 wt.-%, yet more preferably 63±7 wt.-%, most preferably 63±5 wt.-% and in particular 63±3 wt.-%. In a particularly preferred embodiment, the water content of the water-in-water polymer dispersion is at most 80 wt.-%, more preferably at most 75 wt.-%, still more preferably at most 72 wt.%, yet more preferably at most 70 wt.%, most preferably at most 68 wt.% and in particular at most 67 wt.-%.

In a preferred embodiment, the overall polymer content of the water-in-water polymer dispersions according to the invention is at least 20 wt.-%, more preferably at least 30 wt.-%, still more preferably at least 35 wt.-%, yet more preferably at least 40 wt.-%, most preferably within the range of from 45 wt.-% to 65 wt.-% and in particular from 50 wt.-% to 60 wt.-%, based on the total weight of the water-in-water polymer dispersions. In another preferred embodiment, the overall polymer content of the water-in-water polymer dispersions according to the invention is at least 10 wt.-%, more preferably at least 15 wt.-%, still more preferably at least 20 wt.-%, yet more preferably at least 25 wt.%, most preferably within the range of from 25 wt.-% to 45 wt.-% and in particular from 30 wt.-% to 40 wt.-%, based on the total weight of the water-in-water polymer dispersions.

In a particularly preferred embodiment, the overall polymer content of the water-in-water polymer dispersions according to the invention is close to the saturation limit, i.e. close to the limiting concentration beyond which no further polymer may be dispersed (at ambient conditions and without adding further emulsifiers). Preferably, the overall polymer content of the water-in-water polymer dispersion is at least 50% of said limiting concentration, more preferably at least 60%, still more preferably at least 70%, yet more preferably at least 80%, most preferably at least 85% and in particular at least 90% of said limiting concentration. The skilled person knows how to determine the limiting concentration of a water-in-water polymer dispersion at ambient conditions.

Thus, in other words, the water content of the water-in-water polymer dispersions is preferably close to the saturation limit. The water-in-water polymer dispersions according to the invention can be commercialized as stable concentrates that are diluted prior to the individual application. The provision as concentrates reduces shipping costs and improves handling performance. It has been surprisingly found that the in situ polymerization of the monomers forming the cationic copolymer in the presence of the cationic polymeric dispersant can be conducted at comparatively high monomer concentrations (i.e., at a comparatively low water content) and thus, a highly concentrated water-in-water polymer dispersion is obtained without requiring concentration steps, such as evaporating substantial amounts of excessive water under vacuum at elevated temperature.

Optionally, the water-in-water polymer dispersions according to the invention may contain further conventional components, e.g. in the form of water-soluble or oil-soluble acids and/or salts. The acid is preferably present in amounts of 0.1 to 3 wt.% and the salt in amounts of 0.1 to 3 wt.%, each relative to the overall dispersion, and acid and salt taken together are preferably present in amounts of 5 wt.% at most, preferably 4 wt.% at most, relative to the total weight of the dispersion.

Preferably, the water-in-water polymer dispersion according to the invention contains 0.5 to 5.0 wt.-% of at least one acid and/or 0.5 to 5.0 wt.-% of at least one salt, the overall content of acid and salt amounting to 5.0 wt.-%, based on the total weight of the dispersion.

Said further conventional components can be added before, during or after polymerization.

Preferably, the electrical conductivity of the water-in-water polymer dispersion according to the invention at 20°C is at least 1.0 Ω⁻¹m⁻¹, more preferably at least 2.5 Ω⁻¹m⁻¹, still more preferably at least 5.0 Ω⁻¹m⁻¹, yet more preferably within the range of from 5.0 to 80 Ω⁻¹m⁻¹, most preferably within the range of from 7.5 to 70 Ω⁻¹m⁻¹, and in particular within the range of from 10 to 60 Ω⁻¹m⁻¹.

Furthermore, the water-in-water polymer dispersions according to the invention may contain water-soluble polyfunctional alcohols and/or reaction products thereof with fatty amines in amounts of up to 30 wt.%, preferably up to 15 wt.%, and more preferably up to 10 wt.%, relative to the cationic polymeric dispersant. More specifically suitable in this context are polyalkylene glycols, preferably polyethylene glycols, polypropylene glycols, block copolymers of propylene/ethylene oxides, with molecular weights of 50 to 50,000, preferably 1,500 to 30,000, low-molecular weight polyfunctional alcohols such as glycerol, ethylene glycol, propylene glycol, pentaerythritol and/or sorbitol as polyfunctional water-soluble alcohols and/or the reaction products thereof with fatty amines having C₆-C₂₂ in the alkyl or alkylene residues.

Said water-soluble polyfunctional alcohols and/or reaction products thereof with fatty amines can be added before, during or after polymerization.

Preferably, the water-in-water polymer dispersions according to the invention show a retention effect according to the standard test method of Technical Association of Pulp and Paper Industry (TAPPI), namely T261pm-79 method (that is, Britt Jar-method), of at least 50%, more preferably at least 52.5%, still more preferably at least 55%, yet more preferably at least 57.5%, most preferably at least 60% and in particular at least 62.5%.

Preferably, the water-in-water polymer dispersions according to the invention show a sheet formation according to norm ISO 5269 (Rapid Köthen method), of at least 50 g m⁻², more preferably at least 52.5 g m⁻², still more preferably at least 55 g m⁻², yet more preferably at least 57.5 g m⁻², most preferably at least 60 g m⁻² and in particular at least 62.5 g m⁻².

The water-in-water polymer dispersions according to the invention are storage stable, i.e. no substantial sedimentation of the ingredients is observed upon storage under ambient conditions for several days. As sedimentation causes a change of the haze value of the water-in-water polymer dispersion, storage stability may be expressed in terms of a decrease of the haze value upon storage. Suitable optical methods to measure the haze value are known to the person of ordinary skill. Preferably, the haze value of the water-in-water polymer dispersion does not change more than 25%, more preferably not more than 20%, still more preferably not more than 15%, yet more preferably more than 10%, most preferably not more than 7.5% and in particular not more than 5% after storage for 28 days under ambient conditions.

Preferably, the water-in-water polymer dispersions according to the invention are acidic, i.e. have a pH value below 7.0, more preferably below 6.5, still more preferably below 6.0, yet more preferably below 5.5, most preferably below 5.0 and in particular below 4.5.

The water-in-water polymer dispersions according to the invention have several advantages over conventional water-in-water polymer dispersions, e.g.:
- cationic copolymers having a higher molecular weight may be obtained resulting *inter alia* in improved rheological properties of the water-in-water polymer dispersions;
- product viscosities and salt resistance are extremely high - these properties are particularly desirable for enhanced oil recovery or at paper machines with closed water circuit; products having high product viscosities show a decreased tendency for layering;

- the molar ratio of ionic monomers to non-ionic monomers in the cationic polymeric dispersant and/or in the cationic copolymer may be varied within broad limits without significantly deteriorating the essential properties of the water-in-water polymer dispersions;
- the chemistry of the cationic polymeric dispersant is substantially independent from the chemistry of the cationic copolymer; and
- the advantageous properties of the water-in-water polymer dispersions are maintained under shear conditions.

The water-in-water polymer dispersions according to the invention are useful as additives in solid/liquid separation processes, e.g., as flocculants in the sedimentation, flotation or filtration of solids; as thickeners; or as a retention agents or drainage aid, e.g., in papermaking/ retention in paper; or in sludge dewatering in sewage plants or oil-recovery. They show improved application performance, especially regarding ash retention in paper retention and dewatering, particularly under shear conditions. The water-in-water polymer dispersions obtainable according to the invention have the unexpected advantage of being excellent auxiliaries in paper making, particularly useful as retention and dewatering agents in paper making.

A further aspect of the invention relates to the use of the water-in-water polymer dispersion according to the invention as flocculant (flocculating agent), preferably in the manufacture of paper, preferably as retention aid and/or drainage aid, or as thickener or in oil-recovery.

A further aspect of the invention relates to a process for the manufacture of paper, paperboard or cardboard, the process comprising the step of (ii) adding the water-in-water polymer dispersion according to the invention to an aqueous cellulosic suspension. Preferably, the process further comprises the step of (i) adding a further cationic polymeric dispersant to the cellulosic suspension, wherein step (i) is preferably performed prior to step (ii).

Preferably, the process according to the invention is performed on a paper machine having a closed water circuit. It has been surprisingly found that the high salt resistance of the water-in-water polymer dispersions according to the invention is particularly advantageous when the process water of the machine is recycled, e.g. for economical and/or ecological reasons. Thus, when the recycled water already contains a certain amount of salt, this does not immediately cause precipitation of the polymer from the water-in-water polymer dispersion. The salt capacity of the water-in-water polymer dispersion is sufficiently high so that the process water may be recycled repeatedly without significantly deteriorating the performance of the water-in-water polymer dispersion according to the invention.

Preferably, the process for the manufacture of paper comprises forming a cellulosic suspension, flocculating the suspension, optionally mechanically shearing the suspension and optionally reflocculating the suspension, draining the suspension on a screen to form a sheet and then drying the sheet, wherein the suspension is flocculated and/or re-flocculated by introducing the water-in-water polymer dispersion according to the invention.

It has surprisingly been found that the water-in-water polymer dispersions according to the invention provide improved performance in terms of improved retention, particularly under shear conditions, and yet still maintain good drainage and formation performance. The water-in-water polymer dispersions flocculate the cellulosic fibers and other components of the cellulosic paper making stock more efficiently thus inducing improvements in retention.

In the process for the manufacture of paper according to the invention the water-in-water polymer dispersion may be added to the paper making stock as the sole treatment agent in the paper making process, although preferably the water-in-water polymer dispersion may be added as part of a multi-component flocculant system in which the cellulosic suspension is flocculated and then reflocculated.

In one aspect of the invention the cellulosic suspension is flocculated by the water-in-water polymer dispersion (flocculating agent) and then the cellulosic suspension is reflocculated by a further addition of the water-in-water polymer dispersion (reflocculating agent) or alternatively, by another flocculating material (reflocculating agent). Optionally, the floccs formed are degraded before being reflocculated, by for instance applying mechanical shear. This can be for instance passing the flocculated cellulosic suspension through one or more shear stages such as a centri-screen or a fan pump.

In an alternative form of the invention the cellulosic suspension is flocculated by introducing a flocculating material (flocculating agent) and the cellulosic suspension is reflocculated by introducing the water-in-water polymer dispersion (reflocculating agent). Optionally the floccs are degraded before reflocculation.

The cellulosic suspension may be flocculated by introducing the flocculating agent into the suspension at any suitable addition point. This may be for instance before one of the pumping stages or prior to the centri-screen or even after the centri-screen. The cellulosic suspension may then be reflocculated at any suitable point after it has been flocculated. The flocculating agent and reflocculating agent may be added in close proximity, for example without any shear stage between the additions.

Preferably, there is at least one shear stage (preferably selected from cleaning, pumping and mixing stages) separating the addition of flocculating agent and reflocculating agent. Desirably, when the flocculating agent is applied prior to a shear stage, for instance a fan pump or the centri-screen, the reflocculating agent may be added after that shear stage. This may be immediately after the shear stage or more usually further after. Thus, the flocculating agent may be added prior to a fan pump and the reflocculating agent may be added after the centri-screen.

Accordingly, the water-in-water polymer dispersion is added as the flocculating agent and/or as the reflocculating agent.

Desirably, the water-in-water polymer dispersion may be added to the stock at a dose of 5 to 5,000 ppm, more preferably 50 to 2,500 ppm, most preferably 200 to 1,500 ppm, based on solid contents.

When the water-in-water polymer dispersion is used in a paper making process as part of a multi-component flocculating system, it may be added as the flocculating agent and/or reflocculating agent. According to one preferred aspect of the invention the multi-component flocculating system comprises the water-in-water polymer dispersion and a different flocculating material. This flocculating material may be any of the group consisting of water soluble polymers, water insoluble polymeric microbeads, particulate uncooked polysaccharides and inorganic materials. Suitable flocculating materials include inorganic materials such as siliceous materials, alum, aluminium chloro hydrate and polyaluminium chloride.

When the flocculating material is a water soluble polymer, it may be any suitable water soluble polymer, for instance biopolymers, such as nonionic, cationic, anionic and amphoteric starches or other polysaccharides. The flocculating material may also be any suitable cationic, anionic, amphoteric or nonionic synthetic water soluble polymer.

The flocculating material may be a siliceous material which is in the form of an anionic microparticulate composition. The siliceous materials include silica based particles, colloidal silica, silica microgels, silica sols, silica gels, polysilicates, aluminosilicates, borosilicates, polyaluminosilicates, polyborosilicates, zeolites and clays. The clays are preferably swelling clays, for instance this may be typically a bentonite type clay. The preferred clays are swellable in water and include clays which are naturally water swellable or clays which can be modified, for instance by ion exchange to render them water swellable. Suitable water swellable clays include but are not limited to clays often referred to as hectorite, smectites, montmorillonites, nontronites, saponite, sauconite, hormites, attapulgites and sepiolites.

Alternatively, the flocculating material is a colloidal silica, selected from polysilicates and polyaluminosilicates. This includes polyparticulate polysilicic microgels of surface area in excess of 1,000 m²/g, for instance water soluble polyparticulate polyalumino silicate microgels or aluminate polysilicic acid. In addition the flocculating material may be a colloidal silicic acid.

The flocculating material may also be a colloidal borosilicate. The colloidal borosilicate may be prepared by contacting a dilute aqueous solution of an alkali metal silicate with a cation exchange resin to produce a silicic acid and then forming a heel by mixing together a dilute aqueous solution of an alkali metal borate with an alkali metal hydroxide to form an aqueous solution containing 0.01 to 30% B₂O₃, having a pH of from 7 to 10.5.

The cellulosic stock suspension may comprise a filler. The filler may be any of the traditionally used filler materials. For instance, the filler may be clay such as kaolin, or the filler may be a calcium carbonate which could be ground calcium carbonate or in particular precipitated calcium carbonate, or it may be preferred to use titanium dioxide as the filler material. Examples of other filler materials also include synthetic polymeric fillers. The paper making stock may comprise any suitable amount of filler. Generally, the cellulosic suspension comprises at least 5% by weight filler material. Typically the amount of filler will be up to 40% or higher, preferably between 10% and 40% filler.

The flocculating material used in conjunction with the water-in-water polymer dispersion, may be an anionic, nonionic, cationic or amphoteric branched water soluble polymer that has been formed from water soluble ethylenically unsaturated monomer or monomer blend. For instance the branched water soluble polymer may exhibit a) an intrinsic viscosity above 1.5 dl/g and/or saline Brookfield viscosity of above about 2.0 mPa. s.

Alternatively, the flocculating material used in conjunction with the water-in-water polymer dispersion includes cross-linked anionic or amphoteric polymeric microparticles.

A particularly preferred process employs a multi-component flocculation system comprising as a flocculating agent the water-in-water polymer dispersion and then as a reflocculating agent an anionic flocculating material. The anionic flocculating material includes siliceous materials such as microparticulate silicas, polysilicates, anionic polymeric microbeads and water soluble anionic polymers, including both linear and branched water soluble polymers.

In a particularly preferred embodiment of the process for the manufacture of paper, a further cationic polymeric dispersant is added to the cellulosic suspension, preferably before the water-in-water polymer dispersion is introduced, i.e. the feed point of said further cationic polymeric dispersant is preferably located "upstream" on the paper machine with respect to the feed point of the water-in-water polymer dispersion. The feed point of the further cationic polymeric dispersant may be for instance before one of the pumping stages or prior to the centri-screen. The further cationic polymeric dispersant and the water-in-water polymer dispersion may be added in close proximity, for example without any shear stage between the additions.

Said further dispersant may be identical in structure and/or molecular weight distribution with the cationic polymeric dispersant that is present in the water-in-water polymer dispersion and in the presence of which the *in situ* polymerization reaction is performed. Preferably, however, said further cationic polymeric dispersant differs from the cationic polymeric dispersant that is present in the water-in-water polymer dispersion. The preferred embodiments of the cationic polymeric dispersant described above in connection with the water-in-water polymer dispersion also apply to said further cationic polymeric dispersant that is preferably additionally employed in the process for the manufacture of paper.

Preferably, the further cationic polymeric dispersant is derived (synthesized) from
- 30 to 100 wt.% of (alk)acrylamidoalkyltrialkyl ammonium halides, (alk)acryloyl-oxyalkyl trialkyl ammonium halides, alkenyl trialkyl ammonium halides and/or dialkenyl dialkyl ammonium halides; and 0 to 70 wt.% of nonionic co-monomers; or
- a copolymerizate of epichlorohydrin and dialkylamine.

It has been surprisingly found that when employing the water-in-water polymer dispersion according to the invention as a flocculating agent in a dual flocculating system, excellent retention and drainage performance, respectively, can be combined with good formation. Usually, retention/drainage performance and formation performance antagonize one another, but surprisingly, the properties of the water-in-water polymer dispersions according to the invention are advantageous in both regards. The water-in-water polymer dispersions show a significantly improved ash retention, which is a well established measure for retention and drainage performance.

### METHODS

### Solution viscosity:

To determine the solution viscosity of the water-in-water polymer dispersions produced according to the invention, a 5% solution is prepared. The measurement requires 340 g of said 5% solution. To this end, the required amount of deinonized water is placed in a 400 ml beaker. Subsequently, the initially introduced water is stirred with a finger agitator at an intensity such that a cone is formed that reaches down to the bottom of the beaker. The amount of water-in-water dispersion required to produce the 5% solution is injected into the initially introduced, stirred water as a single portion, using a disposable syringe. Thereafter, the solution is stirred at 300 rpm (±10 rpm) for one hour. After standing for 10 minutes, the Brookfield viscosity is determined using an RVT-DV II Brookfield viscosimeter with a no. 2 spindle at a speed of 10.

### Salt viscosity:

An amount of 289 g of deinonized water is weighed out into a 400 ml beaker. Subsequently, the initially introduced water is stirred with a finger agitator at an intensity such that a cone is formed that reaches down to the bottom of the beaker. An amount of 17 g of the water-in-water dispersion produced according to the invention is injected into the initially introduced, stirred water as a single portion, using a disposable syringe. Once the water-in-water dispersion has dissolved, 34 g of sodium chloride (technical grade) are sprinkled in. After stirring for 60 minutes at 300 rpm (±10 rpm), the solution is left to stand for a further 10 minutes. Thereafter, the Brookfield viscosity is determined using an RVT-DV II Brookfield viscosimeter with a no. 1 spindle at a speed of 10.

### Viscoelasticity

Viscoelasticity is measured at a concentration of 0.5 wt.-% (stirring for 1 hour by means of a finger agitator) at 25°C by means of a viscosimeter Haake Rheostress 600. The frequency is set at 0.005 Hz (0.00464 Hz). Deformation is set to 0.01. The diameter of the cone (double cone) is 60 mm.

### Drainage Acceleration

Drainage acceleration is determined using a Schopper-Riegler beating and freeness tester. This test method is described by H. Becker and D. Zerler in the "Schriftenreihe der Papiermacherschule", Vol. 15, first edition 1995, pp. 68 to 71. According to this test method, the acceleration of drainage resulting from the addition of water-in-water dispersions to defined pulp suspensions is determined with the help of a Schopper-Riegler beating and freeness tester (Haage). To this end, water-in-water dispersions are adjusted to a polymer content (polymer and cationic polymeric dispersant) of 0.01% by weight, using fully demineralized water in each case. The drainage apparatus used is the above-mentioned Schopper-Riegler apparatus, which is also used in papermaking industry for measuring the degree of freeness. The apparatus comprises a 2000 ml metal cup with a wire on the underside which is sealed off with a cone during filling. The acceleration of drainage is determined on a 1 wt.-% pulp suspension made of standard recovered paper.

To this end, 3 g oven-dry recovered paper fibers are adjusted with tap water to 300 g of a 1 wt.-% pulp suspension in the Schopper-Riegler freeness cup. The drainage accelerating agent described above, consisting of a water-in-water dispersion, is adjusted to a 0.01 wt.-% solution. The drainage tests are performed with 3 polymer concentrations, where 3 ml, 6 ml and 9 ml of the 0.01 % drainage agent are each diluted with 200 ml tap water and this solution is added to the paper fiber suspension in the Schopper-Riegler freeness cup and made up to 1000 ml with tap water in each case. The contents of the cup are then transferred to the filling chamber of the Schopper-Riegler apparatus, which is closed at the bottom, and the sealing cone is immediately unlocked. The time is measured that is required to filter off 700 ml of the 1000 ml paper fibre suspension after opening the sealing cone. To this end, the filtrate is collected and the time taken to reach 700 ml recorded. This time is referred to as the drainage time.

### EXAMPLES

### Comparative Example C-0 (without hydrophobic monomer)

243.5 g deionized water, 360 g polytrimethylammoniumpropylacrylamide chloride (40%), 300 g acrylamide (50%), 62.5 g trimethylammoniumethylacrylate chloride (80%), 2 g Versenex^{®} 80 as well as 9.5 g ammonium sulfate were weighed into a 2 L flask and dissolved upon stirring. The pH value was adjusted to 4±0.1 by means of sulfuric acid. The solution was purged with nitrogen for 30 min and heated to 42°C under nitrogen atmosphere. The flask was isolated. 3 ml of sodium peroxodisulfate solution (5 %) and after one minute 2 ml VA 044 (10%) were added. After the maximum temperature had been reached, 6 ml sodium peroxodisulfate (25%) and 6 ml sodiumdisulfite (25%) were added. After another 45 minutes 5 g citric acid were added and the overall mixture was stirred for 60 min. The product was cooled down to 22°C by means of tap water.

The polymerization reaction yielded a highly viscous, colorless dispersion. Product viscosity: 7920 mPas, solution viscosity: 1620 mPas, salt viscosity: 642 mPas.

### Inventive Example I-1

A pre-emulsion consisting of 4 g deionized water, 4 g isodecylmethacrylate and 0.5 g Marlon AS 3 acid was prepared upon stirring.

239 g deionized water, 360 g polytrimethylammoniumpropylacrylamide chloride, 298.7 g acrylamide, 62.5 g trimethylammoniumethylacrylate chloride, 2 g Versenex^{®} 80 as well as 9.5 g ammonium sulfate were weighed into a 2 L flask and dissolved upon stirring. The pH value was adjusted to 4±0.1 by means of sulfuric acid. The solution was purged with nitrogen for 30 min and heated to 42°C under nitrogen atmosphere. The flask was isolated and 4.25 g of the pre-emulsion were added. 3 ml of sodium peroxodisulfate solution (5 %) and after one minute 2 ml VA 044 (10%) were added. After the maximum temperature had been reached, 6 ml sodium peroxodisulfate (25%) and 6 ml sodiumdisulfite (25%) were added. After another 45 minutes 5 g citric acid were added and the overall mixture was stirred for 60 min. The product was cooled down to 22°C by means of tap water.

The polymerization reaction yielded a highly viscous, colorless dispersion. Product viscosity: 12100 mPas, solution viscosity: 1760 mPas, salt viscosity: 747 mPas.

### Comparative Example C-1

The polymerization reaction of inventive example I-1 was repeated. However, an equimolar amount of butylacrylate was employed instead of isodecylmethacrylate. The pre-emulsion consisted of 4 g deionized water, 4 g isodecylmethacrylate and 0.5 g Marlon AS 3 and 2.4 g of this pre-emulsion were added to the aqueous reaction mixture.

The polymerization reaction yielded a highly viscous, colorless dispersion. Product viscosity: 8680 mPas, solution viscosity: 1760 mPas, salt viscosity: 690 mPas.

### Inventive Example I-2

The polymerization reaction of inventive example I-1 was repeated. However, the amount of isodecylmethacrylate was increased to 10 g. The pre-emulsion consisted of 10 g deionized water, 10 g isodecylmethacrylate and 1.25 g Marlon AS 3 and 17 g of this pre-emulsion were added to the aqueous reaction mixture.

The polymerization reaction yielded a highly viscous, colorless dispersion. Product viscosity: 18800 mPas, solution viscosity: 1450 mPas, salt viscosity: 580 mPas.

### Comparative Example C-2

The polymerization reaction of inventive example I-2 was repeated. However, an equimolar amount of butylacrylate was employed instead of isodecylmethacrylate. The pre-emulsion consisted of 10 g deionized water, 10 g butylacrylate and 1.25 g Marlon AS 3 and 9.6 g of this pre-emulsion were added to the aqueous reaction mixture.

The polymerization reaction yielded a highly viscous, colorless dispersion. Product viscosity: 12700 mPas, solution viscosity: 1420 mPas, salt viscosity: 578 mPas.

### Comparative Example C-3

The polymerization reaction of inventive example I-1 was repeated. However, instead of polytrimethylammoniumpropylacrylamide chloride, 144 g galactasol (guar gum) were employed as dispersant.

It was impossible to dissolve the amount of guar gum in the water, even if increasing the water amount to 455 g. After a certain amount of the guar gum had been added, the entire mixture clumped. Polymerization was impossible.

Selected rheological properties of the polymer dispersions obtained in the above examples are summarized in the table here below:

| | C-0 | C-1 | I-1 | C-2 | I-2 |
|---|---|---|---|---|---|
| isodecylmethacrylate [mol] R² = C₁₀-alkyl | - | - | 0.0088 | - | 0.0354 |
| butylacrylate [mol] R² = C₄-alkyl | - | 0.0088 | - | 0.0352 | - |
| tan delta at 0.00464 Hz, 25 °C, 0.5 wt.-% | 6.8 | 5.8 | 5.5 | 9.2 | 7.5 |
| product viscosity [mPas] | 7920 | 8680 | 12100 | 12700 | 18800 |
| solution viscosity [mPas] | 1620 | 1760 | 1760 | 1420 | 1450 |
| salt viscosity [mPas] | 642 | 690 | 747 | 578 | 580 |

It becomes evident from the comparison of inventive example I-1 with comparative example C-1 and from the comparison of inventive example I-2 with comparative example C-2, respectively, that the water-in-water polymer dispersions according to the invention exhibit an increased product viscosity but a substantially unchanged solution viscosity (I-1 vs. C-1 and I-2 vs. C-2, respectively). In general, dispersions having a high product viscosity a more stable against sedimentation of solids, as sedimentation is substantially deccelerated.

Furthermore, it becomes evident that tan delta is decreased when the chain length of the hydrophobic moiety R² of the hydrophobic monomer according to general formula (I) is increased (C₄-alkyl vs. C₁₀-alkyl).

Drainage acceleration, total retention and ash retention of the inventive water-in-water polymer dispersions were also measured.

Total retention measures the amount of the fine particles (fine fibers and inorganic fillers) that are retained in the sheet as the pulp slurry drains on the forming wire. Ash retention is a measure of the amount of inorganic filler that is retained in the sheet as the pulp slurry drains on the forming wire.

Figure 1 shows the ash retention of the inventive water-in-water polymer dispersions I-1 and I-2 in comparison to comparative water-in-water polymer dispersions C-0, C-1 and C-2 with shearing and without shearing at a dosing of 1200 ppm at 550°C (Figure 1-A) and at 900°C (Figure 1-B).

The numerical data are summarized in the table here below:

| ex. | total retention | | ash retention | | | | | | | |
|---|---|---|---|---|---|---|---|---|---|---|
| | | | 550°C | | | | 900°C | | | |
| | shearing | | shearing | | | | shearing | | | |
| | with | without | with | △ | without | △ | with | △ | without | △ |
| C-0 | 80.17 | 81.31 | 61.96 | | 64.27 | | 62.02 | | 65.20 | |
| I-1 | 81.65 | 82.08 | 64.88 | +4.5 | 66.15 | +0.1 | 64.97 | +2.8 | 67.36 | +1.3 |
| C-1 | 80.88 | 81.33 | 62.09 | | 66.06 | | 63.23 | | 66.51 | |
| I-2 | 80.86 | 81.19 | 64.55 | +1.6 | 66.30 | +3.9 | 64.61 | +2.0 | 67.75 | +4.0 |
| C-2 | 81.04 | 81.27 | 63.54 | | 63.83 | | 63.35 | | 65.14 | |
| blind | 75.68 | 73.20 | 48.92 | | 45.16 | | 50.88 | | 47.92 | |

It becomes evident from the above data that the ash retention values of the water-in-water polymer dispersions according to the invention (R² = C₁₀-alkyl) are significantly higher than the ash retention values of the water-in-water polymer dispersions according to the prior art (R² = C₄-alkyl), particularly under shear conditions (I-1 vs. C-1 and I-2 vs. C-2, respectively).

It should be emphasized that an increase of the ash retention value by e.g. 1% is an advantage from an economical as well as from an ecological point of view. The relative increase (△) when employing a hydrophobic monomer wherein R² = C₁₀-alkyl instead of a monomer where R² = C₄-alkyl is also displayed in the table.

Figure 2 shows the drainage (dewatering) efficiency of the inventive water-in-water polymer dispersions I-1 and I-2 at 400 ppm (Figure 2-A), 800 ppm (Figure 2-B) and 1200 ppm (Figure 2-C) (■ blind without shearing, □ blind with shearing, ● I-1 without shearing, ∘ I-1 with shearing, ▲ I-2 without shearing, △ I-2 with shearing).

It becomes evident that the water-in-water polymer dispersions according to the invention show excellent drainage performance, even under shear conditions.

## Claims

1. A method for manufacturing a water-in-water polymer dispersion which comprises subjecting an aqueous reaction mixture comprising
(i) a cationic polymeric dispersant and
(ii) a monomer composition containing
a) 45 to 99 mole.-% of one or more non-ionic ethylenically unsaturated monomers, based on the total molar amount of monomers; and
b) 0.001 to 50 mole.-% of one or more cationic ethylenically unsaturated monomers, based on the total molar amount of monomers; and
c) 0.001 to 27.5 mole.-% of one or more hydrophobic monomers according to general formula (I) 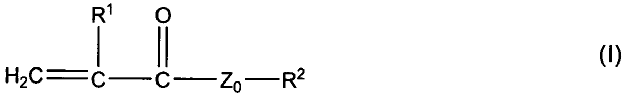 wherein
R¹ means hydrogen or C₁-C₃-alkyl;
R² means C₅-C₂₄-alkyl; and
Z₀ means O, NH or NR³ with R³ being C₁-C₃-alkyl, based on the total molar amount of monomers;
to a free radical polymerization reaction such that the resulting water-in-water polymer dispersion contains a cationic copolymer; wherein the aqueous reaction mixture does not contain branching agents and cross-linkers such that the cationic copolymer is substantially free of branching.

2. The method according to claim 1, wherein the aqueous reaction mixture comprises 0.001 to 27.5 mole.-% of the one or more cationic ethylenically unsaturated monomers, based on the total molar amount of monomers.

3. The method according to claim 1 or 2, wherein in general formula (I) R² means C₉-C₂₀-alkyl.

4. The method according to any of the preceding claims, wherein the hydrophobic monomer according to general formula (I) is selected from the group consisting of pentyl(meth)acrylate, hexyl(meth)acrylate, cyclohexyl(meth)acrylate, heptyl(meth)-acrylate, octyl(meth)acrylate, 2-ethyl-hexyl(meth)acrylate, cyclooctyl(meth)acrylate, nonyl(meth)acrylate, decyl(meth)acrylate, isodecyl(meth)acrylate, undecyl(meth)acrylate, lauryl(meth)acrylate, tridecyl(meth)acrylate, myristyl(meth)acrylate, pentadecyl(meth)acrylate, palmityl(meth)acrylate, heptadecyl(meth)acrylate, stearyl(meth)acrylate and eicosyl(meth)acrylate.

5. The method according to any of the preceding claims, wherein the cationic ethylenically unsaturated monomer is a monomer according to general formula (II) 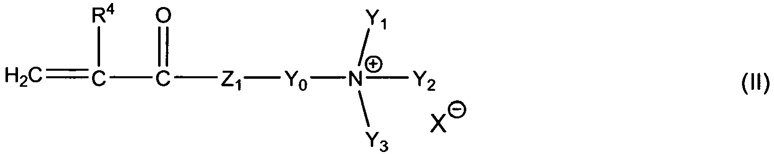 wherein
R⁴ means hydrogen or C₁-C₃-alkyl;
Z₁ means O, NH or NR⁵ with R⁵ being C₁-C₃-alkyl; and
Y₀ means C₂-C₆-alkylene, possibly substituted with one or more hydroxy groups,
Y₁, Y₂, Y₃, independently of each other, mean C₁-C₆-alkyl, and
X⁻ means halogen, pseudo-halogen, acetate or SO₄CH₃⁻.

6. The method according to claim 5, wherein the monomer according to general formula (II) is selected from the group consisting of methyl chloride quaternized ammonium salts of dimethylaminomethyl(meth)acrylate, dimethylaminoethyl(meth)acrylate, dimethylaminopropyl(meth)acrylate, dimethylaminomethyl(meth)acrylamide, dimethylaminoethyl(meth)-acrylamide and dimethylaminopropyl(meth)acrylamide.

7. The method according to any of the preceding claims, wherein the non-ionic monomer is selected from the group consisting of
(a) non-ionic monomers according to general formula (III) 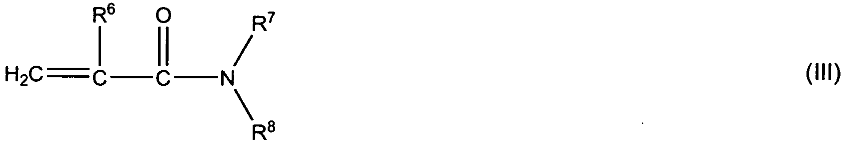 wherein
R⁶ means hydrogen or C₁-C₃-alkyl, and
R⁷ and R⁸ mean, independently of each other, hydrogen, C₁-C₅-alkyl or C₁-C₅-hydroxyalkyl; and
(b) non-ionic amphiphilic monomers according to general formula (IV) 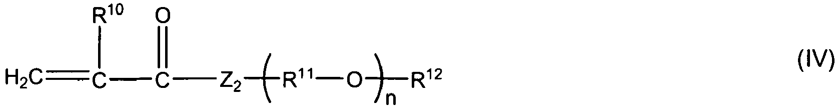 wherein
Z₂ means O, NH or NR⁹ with R⁹ being C₁-C₃-alkyl,
R¹⁰ means hydrogen or C₁-C₃-alkyl,
R¹¹ means C₂-C₆-alkylene,
R¹² means hydrogen, C₈-C₃₂-alkyl, C₈-C₃₂-aryl and/or C₈-C₃₂-aralkyl, and
n means an integer between 1 and 50.

8. The method according to claim 7, wherein the non-ionic monomer is selected from the group consisting of (meth)acrylamide, N-methyl(meth)acrylamide, N-isopropyl-(meth)acrylamide, N,N-dimethyl(meth)acrylamide, N,N-diethyl(meth)acrylamide, N-methyl-N-ethyl(meth)acrylamide and N-hydroxyethyl(meth)acrylamide.

9. The method according to any of the preceding claims, wherein the cationic polymeric dispersant is a water-soluble polymer having a weight average molecular weight M_{w} of at most 2.0×10⁶ g/mol.

10. The method according to any of the preceding claims, wherein the non-ionic ethylenically unsaturated monomer is (meth)acrylamide; the cationic ethylenically unsaturated monomer is selected from the group consisting of trimethylammoniumalkyl(meth)acrylate halides, trimethylammoniumalkyl(meth)acrylamide halides and diallyldialkylammonium halides; and the cationic polymeric dispersant is a cationic polymer derived from at least one monomer selected from the group consisting of trimethylammonium-alkyl(meth)acrylate halides, trimethylammoniumalkyl(meth)acrylamide halides and diallyldialkylammonium halides.

11. A water-in-water polymer dispersion comprising
(i) a cationic polymeric dispersant and
(ii) a cationic copolymer derived from a monomer composition containing
a) 45 to 99 mole.-% of one or more non-ionic ethylenically unsaturated monomers, based on the total molar amount of monomers; and
b) 0.001 to 50 mole.-% of one or more cationic ethylenically unsaturated monomers, based on the total molar amount of monomers; and
c) 0.001 to 27.5 mole.-% of one or more hydrophobic monomers according to general formula (I) 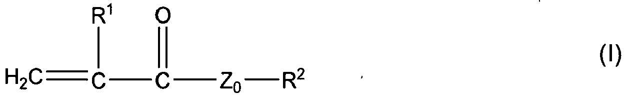 wherein
R¹ means hydrogen or C₁-C₃-alkyl;
R² means C₅-C₂₄-alkyl; and
Z₀ means O, NH or NR³ with R³ being C₁-C₃-alkyl,
based on the total molar amount of monomers; wherein the monomer composition does not contain branching agents and cross-linkers such that the cationic copolymer is substantially free of branching.

12. A water-in-water polymer dispersion obtainable by the method according to any of claims 1 to 10.

13. The dispersion according to claim 11 or 12, wherein the cationic copolymer is present in quantities of 5.0 to 60 wt.-%, based on the total weight of the dispersion.

14. Use of the aqueous polymer dispersion according to any of claims 11 to 13
- as a flocculant in the sedimentation, flotation or filtration of solids,
- as a thickener, or
- as a retention agent or drainage aid in papermaking.

15. A process for the manufacture of paper, paperboard or cardboard, the method comprising the step of adding the water-in-water polymer dispersion according to any of claims 11 to 13 to an aqueous cellulosic suspension.

## Patentansprüche

1. Ein Verfahren zur Herstellung einer Wasser-in-Wasser-Polymerdispersion umfassend die Umsetzung einer wässrigen Reaktionsmischung umfassend
(i) ein kationisches polymeres Dispergiermittel und
(ii) eine Monomerzusammensetzung enthaltend
a) 45 bis 99 Mol-% von einem oder mehreren nicht-ionischen ethylenisch ungesättigten Monomeren, basierend auf der gesamten molaren Menge der Monomere; und
b) 0,001 bis 50 Mol-% von ein oder mehreren kationischen ethylenisch ungesättigten Monomeren, basierend auf der gesamten molaren Menge der Monomere; und
c) 0,001 bis 27,5 Mol-% von ein oder mehreren hydrophoben Monomeren gemäß der allgemeinen Formel (I) 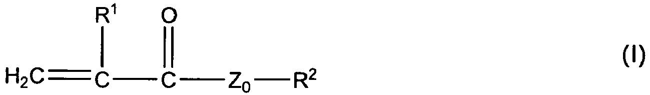 wobei
R¹ für Wasserstoff oder C₁-C₃-Alkyl steht;
R² für C₅-C₂₄-Alkyl steht; und
Z₀ für O, NH oder NR³ steht, wobei R³ C₁-C₃-Alkyl bedeutet, basierend auf der gesamten molaren Menge der Monomere;
in einer freien Radikalpolymerisationsreaktion, sodass die entstehende Wasser-in-Wasser-Polymerdispersion ein kationisches Copolymer enthält, wobei die wässrige Reaktionsmischung keine Verzweigungsmittel und Vernetzungsmittel enthält, sodass das kationische Copolymer im Wesentlichen frei von Verzweigung ist.

2. Das Verfahren gemäß Anspruch 1, wobei die wässrige Reaktionsmischung 0,001 bis 27,5 Mol-% von ein oder mehreren kationischen ethylenisch ungesättigten Monomeren umfasst, basierend auf der gesamten molaren Menge der Monomere.

3. Das Verfahren gemäß Anspruch 1 oder 2, wobei in der allgemeinen Formel (I) R² für C₉-C₂₀-Alkyl steht.

4. Das Verfahren gemäß einem der vorhergehenden Ansprüche, wobei das hydrophobe Monomer gemäß der allgemeinen Formel (I) ausgewählt wird aus der Gruppe bestehend aus Pentyl(meth)acrylat, Hexyl(meth)acrylat, Cyclohexyl(meth)acrylat, Heptyl(meth)acrylat, Octyl(meth)acrylat, 2-Ethyl-hexyl(meth)acrylat, Cyclooctyl(meth)acrylat, Nonyl(meth)acrylat, Decyl(meth)acrylat, Isodecyl(meth)acrylat, Undecyl(meth)acrylat, Lauryl(meth)acrylat, Tridecyl(meth)acrylat, Myristyl(meth)acrylat, Pentadecyl(meth)acrylat, Palmityl(meth)acrylat, Heptadecyl(meth)acrylat, Stearyl(meth)acrylat und Eicosyl(meth)acrylat.

5. Das Verfahren gemäß einem der vorhergehenden Ansprüche, wobei das kationische ethylenisch ungesättigte Monomer ein Monomer gemäß der allgemeinen Formel (II) ist 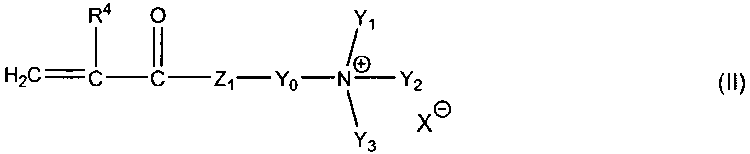 wobei
R⁴ für Wasserstoff oder C₁-C₃-Alkyl steht;
Z₁ für O, NH oder NR⁵ steht, wobei R⁵ C₁-C₃-Alkyl bedeutet; und
Y₀ für C₂-C₆-Alkylen, gegebenenfalls mit ein oder mehreren Hydroxygruppen substituiert, steht,
Y₁, Y₂, Y₃, unabhängig voneinander für C₁-C₆-Alkyl steht, und
X- für Halogen, Pseudohalogen, Acetat oder SO₄CH₃⁻ steht.

6. Das Verfahren gemäß Anspruch 5, wobei das Monomer gemäß der allgemeinen Formel (II) ausgewählt wird aus der Gruppe bestehend aus mit Methylchlorid quaternisierten Ammoniumsalzen von Dimethylaminomethyl(meth)acrylat, Dimethylaminoethyl(meth)acrylat, Dimethylaminopropyl(meth)acrylat, Dimethylaminomethyl(meth)acrylamid, Dimethylaminoethyl(meth)acrylamid und Dimethylaminopropyl(meth)acrylamid.

7. Das Verfahren gemäß einem der vorhergehenden Ansprüche, wobei das nicht-ionische Monomer ausgewählt wird aus der Gruppe bestehend aus
(a) nicht-ionischen Monomeren gemäß der allgemeinen Formel (III) 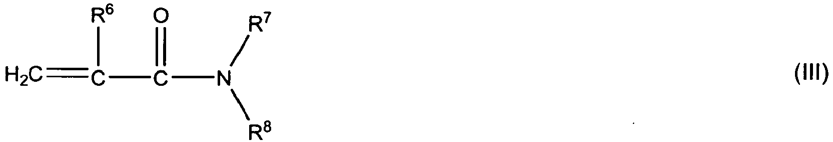 wobei
R⁶ für Wasserstoff oder C₁-C₃-Alkyl steht, und
R⁷ und R⁸ unabhängig voneinander für Wasserstoff, C₁-C₅-Alkyl oder C₁-C₅-Hydroxyalkyl stehen; und
(b) nicht-ionische amphiphile Monomere gemäß der allgemeinen Formel (IV) 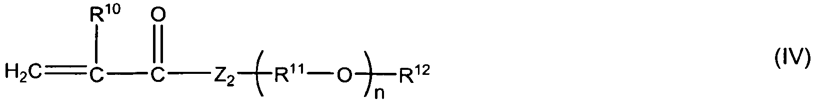 wobei
Z₂ für O, NH oder NR⁹ steht, wobei R⁹ C₁-C₃-Alkyl bedeutet,
R¹⁰ für Wasserstoff oder C₁-C₃-Alkyl steht,
R¹¹ für C₂-C₆-Alkylen steht,
R¹² für Wasserstoff, C₈-C₃₂-Alkyl, C₈-C₃₂-Aryl und/oder C₈-C₃₂-Aralkyl steht, und
n eine ganze Zahl zwischen 1 und 50 bedeutet.

8. Das Verfahren gemäß Anspruch 7, wobei das nicht-ionische Monomer ausgewählt wird aus der Gruppe bestehend aus (Meth)acrylamid, N-Methyl(meth)acrylamid, N-Isopropyl(meth)acrylamid, N,N-Dimethyl(meth)acrylamid, N,N-Diethyl(meth)acrylamid, N-Methyl-N-ethyl(meth)acrylamid und N-Hydroxyethyl(meth)acrylamid.

9. Das Verfahren gemäß einem der vorhergehenden Ansprüche, wobei das kationische polymere Dispergiermittel ein wasserlösliches Polymer mit einem gewichtsmittleren Molekulargewicht M_{w} von höchstens 2,0x10⁶ g/mol ist.

10. Das Verfahren gemäß einem der vorhergehenden Ansprüche, wobei das nicht-ionische ethylenisch ungesättigte Monomer (Meth)acrylamid ist; das kationische ethylenisch ungesättigte Monomer ausgewählt wird aus der Gruppe bestehend aus Trimethylammoniumalkyl(meth)acrylathalogeniden, Trimethylammoniumalkyl(meth)-acrylamidhalogeniden und Diallyldialkylammoniumhalogeniden; und das kationische polymere Dispergiermittel ein kationisches Polymer abgeleitet von wenigstens einem Monomer ausgewählt aus der Gruppe bestehend aus Trimethylammoniumalkyl(meth)-acrylathalogeniden, Trimethylammoniumalkyl(meth)acrylamidhalogeniden und Diallyldialkylammoniumhalogeniden ist.

11. Eine Wasser-in-Wasser-Polymerdispersion umfassend
(i) ein kationisches polymeres Dispergiermittel und
(ii) ein kationisches Copolymer abgeleitet von einer Monomerzusammensetzung enthaltend
a) 45 bis 99 Mol-% von ein oder mehreren nicht-ionischen ethylenisch ungesättigten Monomeren, basierend auf der gesamten molaren Menge der Monomere; und
b) 0,001 bis 50 Mol-% von ein oder mehreren kationischen ethylenisch ungesättigten Monomeren, basierend auf der gesamten molaren Menge der Monomere; und
c) 0,001 bis 27,5 Mol-% von ein oder mehreren hydrophoben Monomeren gemäß der allgemeinen Formel (I) 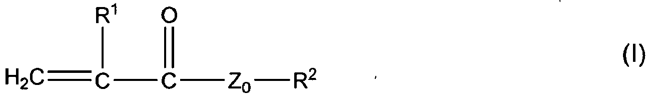 wobei
R¹ für Wasserstoff oder C₁-C₃-Alkyl steht;
R² für C₅-C₂₄-Alkyl steht; und
Zo für O, NH oder NR³ steht, wobei R³ C₁-C₃-Alkyl bedeutet,
basierend auf der gesamten molaren Menge der Monomere; wobei die Monomerzusammensetzung keine Verzweigungsmittel und Vernetzungsmittel enthält, sodass das kationische Copolymer im Wesentlichen frei von Verzweigung ist.

12. Eine Wasser-in-Wasser-Polymerdispersion erhältlich durch das Verfahren gemäß einem der vorhergehenden Ansprüche 1 bis 10.

13. Die Dispersion gemäß Anspruch 11 oder 12, wobei das kationische Copolymer in Mengen von 5,0 bis 60 Gew.-% vorhanden ist, basierend auf dem Gesamtgewicht der Dispersion.

14. Verwendung der wässrigen Polymerdispersion gemäß einem der Ansprüche 11 bis 13
- als ein Flockungsmittel in der Ablagerung, Flotation oder Filtration von Feststoffen,
- als ein Verdickungsmittel, oder
- als ein Retentionsmittel oder Entwässerungsmittel bei der Papierherstellung.

15. Ein Verfahren zur Herstellung von Papier, Pappe oder Karton, wobei das Verfahren dem Schritt des Hinzufügens der Wasser-in-Wasser-Polymerdispersion gemäß einem der Ansprüche 11 bis 13 zu einer wässrigen cellulosehaltigen Suspension umfasst.

## Revendications

1. Procédé pour fabriquer une dispersion de polymère eau dans l'eau, qui consiste à soumettre un mélange réactionnel aqueux comprenant
(i) un dispersant polymère cationique et
(ii) une composition de monomères contenant
a) 45 à 99 % en moles, par rapport à la quantité molaire totale des monomères, d'un ou plusieurs monomères non-ioniques à insaturation éthylénique ; et
b) 0,001 à 50 % en moles, par rapport à la quantité molaire totale des monomères, d'un ou plusieurs monomères cationiques à insaturation éthylénique ; et
c) 0,001 à 27,5 % en moles, par rapport à la quantité molaire totale des monomères, d'un ou plusieurs monomères hydrophobes de formule générale (I) 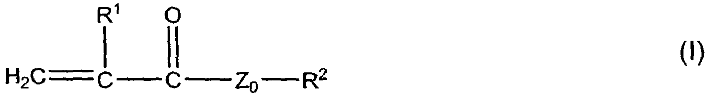 dans laquelle
R¹ représente l'hydrogène ou un alkyle en C₁ à C₃ ;
R² représente un alkyle en C₅ à C₂₄ ; et
Z₀ représente 0, NH ou NR³, où R³ est un alkyle en C₁ à C₃ ;
à une réaction de polymérisation radicalaire de façon que la dispersion de polymère eau dans l'eau résultante contienne un copolymère cationique ; dans lequel le mélange réactionnel aqueux ne contient pas d'agents de ramification et d'agents de réticulation, si bien que le copolymère cationique est pratiquement exempt de ramifications.

2. Procédé selon la revendication 1, dans lequel le mélange réactionnel aqueux comprend 0,001 à 27,5 % en moles, par rapport à la quantité molaire totale des monomères, du ou des monomères cationiques à insaturation éthylénique.

3. Procédé selon la revendication 1 ou 2, dans lequel, dans la formule générale (I), R² représente un alkyle en C₉ à C₂₀.

4. Procédé selon l'une quelconque des revendications précédentes, dans lequel le monomère hydrophobe de formule générale (I) est choisi dans l'ensemble constitué par le (méth)acrylate de pentyle, le (méth)acrylate d'hexyle, le (méth)acrylate de cyclohexyle, le (méth)acrylate d'heptyle, le (méth)acrylate d'octyle, le (méth)acrylate de 2-éthylhexyle, le (méth)acrylate de cyclooctyle, le (méth)acrylate de nonyle, le (méth)acrylate de décyle, le (méth)acrylate d'isodécyle, le (méth)acrylate d'undécyle, le (méth)acrylate de lauryle, le (méth)acrylate de tridécyle, le (méth)acrylate de myristyle, le (méth)acrylate de pentadécyle, le (méth)acrylate de palmityle, le (méth)acrylate d'heptadécyle, le (méth)acrylate de stéaryle et le (méth)acrylate d'éicosyle.

5. Procédé selon l'une quelconque des revendications précédentes, dans lequel le monomère cationique à insaturation éthylénique est un monomère de formule générale (II) 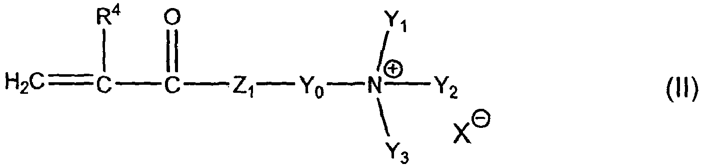 dans laquelle
R⁴ représente l'hydrogène ou un alkyle en C₁ à C₃ ;
Z₁ représente 0, NH ou NR⁵, où R⁵ est un alkyle en C₁ à C₃ ; et
Y₀ représente un alkylène en C₂ à C₆, éventuellement substitué par un ou plusieurs groupes hydroxy,
Y₁, Y₂, Y₃, indépendamment les uns des autres, représentent un alkyle en C₁ à C₆, et
X⁻ représente un halogène, un pseudo-halogène, un acétate ou SO₄CH₃⁻.

6. Procédé selon la revendication 5, dans lequel le monomère de formule générale (II) est choisi dans l'ensemble constitué par les sels d'ammonium quaternisés au chlorure de méthyle de (méth)acrylate de diméthylaminométhyle, (méth)acrylate de diméthylaminoéthyle, (méth)acrylate de diméthylaminopropyle, diméthylaminométhyl(méth)acrylamide, diméthylaminoéthyl(méth)acrylamide et diméthylaminopropyl(méth)acrylamide.

7. Procédé selon l'une quelconque des revendications précédentes, dans lequel le monomère non-ionique est choisi dans l'ensemble constitué par
(a) les monomères non-ioniques de formule générale (III) 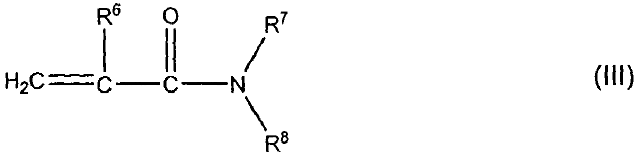 dans laquelle
R⁶ représente l'hydrogène ou un alkyle en C₁ à C₃, et
R⁷ et R⁸ représentent, indépendamment l'un de l'autre, l'hydrogène, un alkyle en C₁ à C₅ ou un hydroxyalkyle en C₁ à C₅ ; et
(b) les monomères amphiphiles non-ioniques de formule générale (IV) 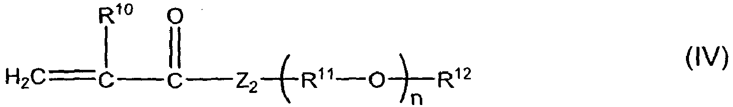 dans laquelle
Z₂ représente 0, NH ou NR⁹, où R⁹ est un alkyle en C₁ à C₃,
R¹⁰ représente l'hydrogène ou un alkyle en C₁ à C₃,
R¹¹ représente un alkylène en C₂ à C₆,
R¹² représente l'hydrogène, un alkyle en C₈ à C₃₂, un aryle en C₈ à C₃₂ et/ou un aralkyle en C₈ à C₃₂, et
n représente un entier compris entre 1 et 50.

8. Procédé selon la revendication 7, dans lequel le monomère non-ionique est choisi dans l'ensemble constitué par le (méth)acrylamide, le N-méthyl(méth)acrylamide, le N-isopropyl(méth)acrylamide, le N,N-diméthyl(méth)acrylamide, le N,N-diéthyl(méth)acrylamide, le N-méthyl-N-éthyl(méth)acrylamide et le N-hydroxyéthyl(méth)acrylamide.

9. Procédé selon l'une quelconque des revendications précédentes, dans lequel le dispersant polymère cationique est un polymère soluble dans l'eau ayant une masse moléculaire moyenne en masse M_{w} d'au plus 2,0 x 10⁶ g/mol.

10. Procédé selon l'une quelconque des revendications précédentes, dans lequel le monomère non-ionique à insaturation éthylénique est le (méth)acrylamide ; le monomère cationique à insaturation éthylénique est choisi dans l'ensemble constitué par les halogénures d'alkyl(méth)acrylate de triméthylammonium, les halogénures de triméthylammoniumalkyl(méth)acrylamide et les halogénures de diallyldialkylammonium ; et le dispersant polymère cationique est un polymère cationique dérivé d'au moins un monomère choisi dans l'ensemble constitué par les halogénures d'alkyl(méth)acrylate de triméthylammonium, les halogénures de triméthylammoniumalkyl(méth)acrylamide et les halogénures de diallyldialkylammonium.

11. Dispersion de polymère eau dans l'eau comprenant
(i) un dispersant polymère cationique et
(ii) un copolymère cationique dérivé d'une composition de monomères contenant
a) 45 à 99 % en moles, par rapport à la quantité molaire totale des monomères, d'un ou plusieurs monomères non-ioniques à insaturation éthylénique ; et
b) 0,001 à 50 % en moles, par rapport à la quantité molaire totale des monomères, d'un ou plusieurs monomères cationiques à insaturation éthylénique ; et
c) 0,001 à 27,5 % en moles, par rapport à la quantité molaire totale des monomères, d'un ou plusieurs monomères hydrophobes de formule générale (I) 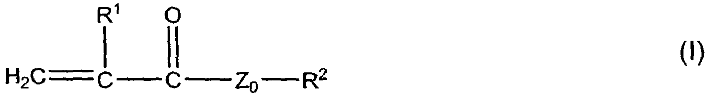 dans laquelle
R¹ représente l'hydrogène ou un alkyle en C₁ à C₃ ;
R² représente un alkyle en C₅ à C₂₄ ; et
Z₀ représente 0, NH ou NR³, où R³ est un alkyle en C₁ à C₃ ;
dans laquelle la composition de monomères ne contient pas d'agents de ramification et d'agents de réticulation, si bien que le copolymère cationique est pratiquement exempt de ramifications.

12. Dispersion de polymère eau dans l'eau pouvant être obtenue par le procédé selon l'une quelconque des revendications 1 à 10.

13. Dispersion selon la revendication 11 ou 12, dans laquelle le copolymère cationique est présent en des quantités de 5,0 à 60 % en poids par rapport au poids total de la dispersion.

14. Utilisation de la dispersion aqueuse de polymère selon l'une quelconque des revendications 11 à 13
- en tant que floculant dans la sédimentation, la flottation ou la filtration de solides,
- en tant qu'épaississant, ou
- en tant qu'agent de rétention ou d'auxiliaire d'égouttage dans la fabrication du papier.

15. Procédé pour la fabrication de papier, de carton blanchi ou de carton, lequel procédé comprend l'étape d'addition de la dispersion de polymère eau dans l'eau selon l'une quelconque des revendications 11 à 13 à une suspension aqueuse cellulosique.
